# EUROPÄISCHE PATENTSCHRIFT

(11) **EP 3 090 967 B1**
(45) Veröffentlichungstag und Bekanntmachung des Hinweises auf die Patenterteilung: **03.04.2019**
(21) Anmeldenummer: 16167275.3
(22) Anmeldetag: 27.04.2016
(51) Int. Cl.: B65G 17/48, B65G 9/00

(54) **HÄNGETASCHE MIT TRAPDOOR SOWIE HÄNGETASCHENGESTELL ZUM AUSBILDEN EINER SOLCHEN SOWIE HÄNGEFÖRDEREINRICHTUNG UMFASSEND EINE SOLCHE**
HANGING BAG WITH TRAPDOOR AND HANGING BAG FRAME FOR FORMING A DEVICE OF THIS TYPE AND OVERHEAD CONVEYOR SYSTEM COMPRISING SUCH
DOSSIER SUSPENDU AVEC UNE TRAPPE ET SUPPORT DE DOSSIERS SUSPENDUS DESTINE A LE FORMER ET DISPOSITIF DE TRANSPORT SUSPENDU LE COMPRENANT

(30) Priorität: 06.05.2015 DE 102015208393; 18.05.2015 DE 202015003612 U
(43) Veröffentlichungstag der Anmeldung: 09.11.2016
(73) Patentinhaber: RSL Logistik GmbH & Co. KG, 86899 Landsberg (DE)
(72) Erfinder:
(74) Vertreter: Weickmann & Weickmann PartmbB

(56) Entgegenhaltungen:
- EP-A1- 2 130 968
- EP-A1- 2 708 478
- EP-A1- 2 786 940
- EP-A2- 2 196 415
- WO-A1-2014/012965
- DE-A1-102004 018 569
- JP-A- H07 304 514

## Beschreibung

Die vorliegende Erfindung betrifft eine Hängetasche gemäß dem Oberbegriff des Anspruchs 1, also eine Hängetasche als Fördergutbehälter zum Transport von Fördergut in einer Hängefördereinrichtung, mit einem Anhängmittel und mit einer ersten Taschenseitenwand und einer zweiten Taschenseitenwand, die einander gegenüberliegend einen Fördergutaufnahmebereich mit einer ersten Öffnung zwischen sich begrenzen und in einem Klappverbindungsbereich so miteinander verbunden sind, dass sie auseinanderklappbar sind und zusammenklappbar sind, um die erste Öffnung aufzuweiten oder zu verengen, wobei das Anhängmittel zum Anhängen der Hängetasche in einer Transportstellung mit obenliegender erster Öffnung an eine Hängefördereinrichtung ausgebildet ist, wobei die erste Taschenseitenwand (12a, 12b, 34) und die zweite Taschenseitenwand (13, 14, 32) in der Transportstellung so relativ zueinander bewegbar sind,dass sie eine zweite Öffnung des Fördergutaufnahmebereichs (30) am unteren Ende der Hängetasche (50) bilden.

Derartige Hängetaschen sind beispielsweise aus der WO 2014/012965 A1 bekannt. Diese Hängetaschen sind so gestaltet, dass sie aus einer Transportstellung, in welcher der Fördergutaufnahmebereich weitgehend geschlossen ist und die beiden Taschenseitenwände im Wesentlichen vertikal nach unten hängen, an einer Ladestation geöffnet werden können, ggf. unter Verbleib an der Hängefördereinrichtung, und zwar nur durch Schwenken der ersten Taschenseitenwand aus ihrer vertikalen Stellung heraus, um die vorzugsweise horizontale Schwenkachse. Dabei kann die erste Taschenseitenwand in eine zumindest annähernd horizontale Lage gebracht werden.

Bei dieser Schwenkbewegung der ersten Taschenseitenwand kommt es zu einem automatischen Aufklappen der Hängetasche, da die zweite Taschenseitenwand von dem vorzugsweise an der Hängefördereinrichtung hängenden und nach oben gerichteten Anhängmittel so beaufschlagt oder mit diesen verbunden ist, dass sie der Schwenkbewegung der ersten Taschenseitenwand nicht in einem relevanten Maß folgen kann.

In automatisierten Warenlagern, Produktionsstätten und beim Warentransport ganz allgemein besteht häufig die Notwendigkeit, auf engem Raum mehrere Entladestationen bzw. Arbeitsbereiche unterschiedlicher Art unterhalb der Hängefördereinrichtung vorzusehen. Dabei kann die bekannte Hängetasche unzureichend sein, denn die erhebliche Drehung, teilweise um 90° oder mehr, der ersten Taschenseitenwand, um das Entladen zu ermöglichen, benötigt einen erheblichen Platzaufwand, verbraucht erheblich Energie für die Drehbewegung, denn bei dieser wird die Ware ebenfalls mit gedreht, und benötigt für bestimmte Anwendungen zusätzliche Rutschen oder ähnliches, da die Ware auf einer Höhe entnommen bzw. ausgegeben wird, die nicht der Höhe entspricht, auf der die Ware nachher weiterbearbeitet wird. Insbesondere ist es nicht unbedingt möglich, einen Arbeitsbereich direkt unter der Hängefördereinrichtung anzuordnen, denn ein solcher Arbeitsbereich muss grundsätzlich unterhalb des unteren Endes der vorbeifahrenden Hängetaschen sein, womit bei direktem Entleeren der bekannten Hängetasche oberhalb des Arbeitsbereiches die Fallhöhe für einige Warenarten zu hoch sein kann. EP 2 130 968 A1 zeigt eine Hängetaschen nach dem Oberbegriff des Anspruchs 1.

EP 2 786 940 A1 zeigt ein Hängetaschengestell nach dem Oberbegriff des Anspruchs 11.

Vor dem Hintergrund dieses Standes der Technik besteht die Aufgabe der vorliegenden Erfindung darin, die bekannte Hängetasche so weiterzuentwickeln, dass sie in platzsparender Weise entleert werden kann und insbesondere auch auf verschiedene Arten entleert werden kann, so dass für die erforderliche Anwendung die geeignete Art der Leerung gewählt werden kann. Ferner ist Aufgabe der Erfindung ein Hängetaschengestell zur Ausbildung einer solchen Hängetasche sowie eine entsprechende Hängefördereinrichtung anzugeben.

Gleichzeitig ist Aufgabe der vorliegenden Erfindung eine Hängetasche, anzugeben, die in platzsparender Weise entleert werden kann, sicher schließt und einfach und insbesondere mit automatisierten Mitteln geöffnet werden kann.

Diese Aufgaben werden gelöst durch eine Hängetasche gemäß Anspruch 1, ein Hängetaschengestell gemäß Anspruch 11 und eine Hängefördereinrichtung gemäß Anspruch 17. Vorteilhafte Ausgestaltungen sind Gegenstand der abhängigen Ansprüche.

Die erfindungsgemäße Hängetasche ist so ausgebildet, dass die erste und die zweite Taschenseitenwand in der Transportstellung so bewegbar sind, dass sie eine zweite Öffnung des Fördergutaufnahmebereichs bilden.

Die Hängetasche aus der WO 2014/012965 A1 kann genutzt werden. Diese kann durch beliebige Merkmalen weitergehend ausgebildet werden. Insbesondere können auch zur Lösung der Aufgabe, nämlich eine Hängetasche mit mehreren Möglichkeiten zum Öffnen bzw. zum Entleeren anzugeben, die in der WO 2014/012965 A1 offenbarten Merkmale, insbesondere hinsichtlich des Anhängmittels, der Seitenwänden, des Mechanismus und Verfahrens zum Aufweiten und Verengen der ersten Öffnung, als Weiterbildung der Gegenstände der Ansprüche genutzt werden, um verschiedene vorteilhafte Ausführungsbeispiele zu realisieren.

Erfindungsgemäß sind die erste Taschenseitenwand und die zweite Taschenseitenwand in dem Klappverbindungsbereich oder einem weiteren Klappverbindungsbereich so miteinander verbunden, dass sie auseinanderklappbar sind und zusammenklappbar sind, um die zweite Öffnung aufzuweiten oder zu verengen.

Eine solche Öffnung nach unten kann auch als Trapdoor bezeichnet werden, denn von der Funktionsweise her entspricht sie einer Falltür, die nach unten geöffnet wird, woraufhin die Ware bzw. der Gegenstand nach unten aus der Hängetasche herausfällt. Dabei ist vorteilhaft, dass lediglich eine der beiden Taschenseitenwände, bevorzugt die zweite Taschenseitenwand, bewegt werden muss, um die Ware aus der Hängetasche zu entladen. Damit lässt sich insbesondere ein Mitdrehen der Ware vermeiden und gleichzeitig genügt eine erheblich kleinere Drehung zum Entladen. Im Allgemeinen genügt nämlich bereits ein Schwenken um 30°, um die Öffnung nach unten ausreichend für ein Herausfallen oder Herausrutschen der Ware zu öffnen. Dadurch erfordern erfindungsgemäße Hängetaschen, die das erfindungsgemäße Hängetaschengestell nutzen, weniger Platz beim Entladen.

Gleichzeitig verlässt die Ware die Hängetasche am unteren Ende und nicht wie beim bekannten Modell ausschließlich auf etwa auf einem viertel bis zur halben Höhe der Hängetasche, wodurch die Fallhöhe begrenzt ist, und eher Arbeitsbereiche unmittelbar unterhalb einer Hängefördereinrichtung angeordnet werden können. Durch die reduzierte Fallhöhe kann so eine erfindungsgemäße Hängetasche aufgeklappt werden und die Ware unmittelbar auf einen Tisch darunter fallen, ohne dass zwingend Rutschen oder ähnliche Warenleitvorrichtungen erforderlich sind, die die Ware auf eine geeignete Höhe für einen Arbeitsbereich transportieren.

Gleichzeitig bleibt das bekannte Prinzip des Öffnens des Fördergutaufnahmebereichs durch Verschwenken des ersten Taschenseitenwand erhalten, so dass für eine Hängefördereinrichtung beide Möglichkeiten der Öffnung der Hängetasche genutzt werden können, was erlaubt, jeweils entsprechend der Notwendigkeit die Vorteile der jeweiligen Art, die Hängetasche zu öffnen, auszunutzen, was insgesamt zu einer Platz- und Arbeitsoptimierung führt.

Bevorzugt umfassen die erste Taschenseitenwand und die zweite Taschenseitenwand jeweils ein oberes Taschenseitenwandelement und ein unteres Taschenseitenwandelement, wobei beim Auseinanderklappen zum Aufweiten der ersten Öffnung die oberen Taschenseitenwandelemente und beim Auseinanderklappen zum Aufweiten der zweiten Öffnung die unteren Taschenseitenwandelemente auseinanderklappen.

Bevorzugt sind die erste Taschenseitenwand und die zweite Taschenseitenwand durch ein Rastmittel miteinander so verrastet, dass bei Lösung des Rastmittels die erste Taschenseitenwand und die zweite Taschenseitenwand in der Transportstellung so relativ zueinander bewegbar sind, dass die zweite Öffnung aufweitbar ist.

Bevorzugt ist das Rastmittel durch mindestens einen gebogenen Laschenfortsatz der ersten Taschenseitenwand oder der zweiten Taschenseitenwand ausgebildet, in dem ein Rastabschnitt entsprechend der zweiten Taschenseitenwand oder der ersten Taschenseitenwand anordnenbar ist, um eine Verrastung zu bewirken.

Bevorzugt weist das Rastmittel einen Entrastungsabschnitt auf, an dem die Verrastung durch eine Krafteinwirkung von außen lösbar ist. Insbesondere umfasst das Rastmittel an der ersten Taschenseitenwand oder der zweiten Taschenseitenwand einen Vorsprung oder eine Ausnehmung, so dass bei einer Krafteinwirkung im Bereich des Vorsprungs oder der Ausnehmung zu dem Klappverbindungsbereich oder dem weiteren Klappverbindungsbereich hin oder davon weg nur Kraft auf eine der Taschenseitenwände ausgeübt werden muss, um die Verrastung zu lösen. Bevorzugt ist eine solche kraftbeaufschlagbare Taschenseitenwand mit einem elastischem Element weg von oder hin zu dem Klappverbindungsbereich oder dem weiteren Klappverbindungsbereich vorgespannt.

Alternativ oder zusätzlich kann das Rastmittel als Rasterklemme ausgebildet sein, wobei die Rasterklemme einen um einen Abschnitt des Bügelelements des ersten Taschenseitenwandbügels drehbaren Bereich aufweist, der mit einem Klemm- bzw. Hakenabschnitt verbunden ist, der einen Abschnitt des zweiten Taschenseitenwandbügels wenigstens teilweise umgreift, wobei die Rasterklemme ferner einen Betätigungsabschnitt aufweist, durch dessen Betätigung eine Drehbewegung der Rasterklemme bewirkbar ist, wodurch der Klemm- bzw. Hakenabschnitt von dem Abschnitt des zweiten Taschenseitenwandbügels gelöst wird. Dadurch lässt sich eine Öffnung der Tasche nach unten einfach realisieren, indem während der Bewegung der Hängetasche ein Hindernis im Pfad des Betätigungsabschnitts platziert wird, womit die Fahrbewegung der Hängetasche unmittelbar zur Krafteinwirkung und Betätigung und damit zum Lösen des Rastmittels führt. Alternativ können auch Vorrichtungen, die gezielt eine Kraft auf den Betätigungsabschnitt ausüben, vorgesehen werden, beispielsweise pneumatische Elemente. Die Rasterklemme ist dabei bevorzugt aus einem Material mit geeigneter Elastizität, insbesondere aus Kunststoff.

Es können auch zwei oder mehr Rastmittel, insbesondere Rasterklemmen, vorgesehen sein.

Bevorzugt umfasst die erste Taschenseitenwand ein flexibles und/oder ein nicht flexibles Material und die zweite Taschenseitenwand ein flexibles Material, so dass durch das flexible Material und das nicht flexible Material und/oder durch die beiden flexiblen Materialien ein in der Hängetasche aufgenommener Gegenstand eine Klemmwirkung erfährt. Es wird darauf hingewiesen, dass im Rahmen der vorliegenden Erfindung flexibel insbesondere auch elastisch bedeuten und/oder umfassen kann, so dass flexible Materialien insbesondere auch elastische Materialien umfasst.

Bevorzugt umfasst die erste Taschenseitenwand und/oder die zweite Taschenseitenwand Rahmen, Bügel und/oder Rand, der/die zusammen mit einem oder mehreren flexiblen und/oder nicht flexiblen Flächenelementen eine Taschenseitenwand ausbildet. Dabei bildet bevorzugt das Flächenelement mit Rahmen, Bügel und/oder Rand einen in vier Raumrichtungen geschlossenen Taschenteilbereich aus. Dabei ist bevorzugt das Flächenelement auch seitlich an Rahmen, Bügel und/oder Rand befestigt, so dass auch in einer Öffnungsstellung die Hängetasche seitlich teilweise oder vollständig geschlossen ist. Insbesondere kann auch ein verstärkter und/oder erhöhter Rand vorgesehen sein, um eine stabile Befestigung zu gewährleisten.

Ferner sind bevorzugt die erste und/oder die zweite Taschenseitenwand und/oder das Rastmittel so ausgebildet, dass das Eigengewicht der Ware nach Lösung des Rastmittels ein Aufweiten der zweiten Öffnung bewirkt und/oder dass nach Aufweiten der ersten Öffnung durch Schwenken der ersten Taschenseitenwand diese aufgrund ihres Eigengewichts und der Position ihres Schwerpunktes relativ zur Schwenkachse von alleine in die Transportstellung zurückkehrt.

Bevorzugt weist wenigstens eine Taschenseitenwand eine Innenwand und/oder ein Innenfach auf, die eine Unterteilung des Fördergutaufnahmebereiches in mehrere Teilbereiche bewirkt. Dadurch lassen sich auch geeignet in einer entsprechenden Hängetasche mehrere kleinere Waren anordnen. Insbesondere kann durch eine geeignete Wahl der Fachaufteilung bzw. Wahl, welche Taschenseitenwand die zusätzlichen Fächer an einer entsprechenden Stelle aufweist, bewirkt werden, dass sich bestimmte Fächer nur beim Öffnen nach unten oder nur beim Öffnen nach oben bzw. zur Seite hin entleeren.

Bevorzugt ist die Hängetasche mit mindestens einer vorzugsweise automatisch auslesbaren Kennung versehen, beispielsweise in der Form eines Strichcodes, eines 2D-Codes oder eines RFID-Transponders. Diese ermöglichen ein technisch einfaches Auslesen und Überwachen und sind gleichzeitig ausreichend robust für eine lange Haltbarkeit.

Die Kennung kann an einer beliebigen Stelle der Hängetasche vorgesehen sein. Es können auch mehrere gleiche und/oder verschiedene Kennungen an einer Hängetasche vorgesehen sein. Dies erlaubt die automatisierte Nachverfolgung einer einzelnen Hängetasche, die in einer Hängefördereinrichtung verwendet wird. Dadurch lässt sich auch indirekt die einzelne in der Hängetasche angeordnete Ware nachverfolgen, wodurch eine automatische Steuerung des Warenstroms realisiert werden kann. Ferner kann aber auch eine automatisch be- und/oder überschreibbare Kennung vorgesehen werden, um beim Beladen einer Hängetasche mit einer Ware die Kennung entsprechend anzupassen.

Ein weiterer Aspekt der Erfindung ist ein Hängetaschengestell nach Anspruch 11 mit einem ersten Taschenseitenwandbügel und einem Anhängmittel zum Ausbilden einer erfindungsgemäßen Hängetasche durch Anordnen von Flächenelementen an dem ersten Taschenseitenwandbügel und dem Anhängmittel unter Ausbildung von Taschenseitenwänden, wobei der erste Taschenseitenwandbügel in einem Klappverbindungsbereich, bevorzugt um eine Gelenkverbindung mit Schwenkachse, schwenkbeweglich mit dem Anhängmittel so verbunden ist, dass durch Schwenken des ersten Taschenseitenwandbügels um die Schwenkachse der erste Taschenseitenwandbügels und das Anhängmittel auseinanderklappbar und zusammenklappbar sind, um eine erste Öffnung einer mit dem Hängetaschengestell ausgebildeten Hängetasche aufzuweiten oder zu verengen, wobei das Hängetaschengestell einen zweiten Taschenseitenwandbügel aufweist, der schwenkbeweglich mit dem ersten Taschenseitenwandbügel in einem Klappverbindungsbereich oder in einem weiteren Klappverbindungsbereich verbunden und durch ein Rastmittel mit diesem verrastet ist, so dass bei Lösung des Rastmittels der erste Taschenseitenwandbügel und der zweite Taschenseitenwandbügel trennbar sind, um eine zweite Öffnung einer mit dem Hängetaschengestell ausgebildeten Hängetasche zu öffnen.

Vorteilhaft an einem solchem Hängetaschengestell ist insbesondere, dass die Flächenelemente austauschbar gestaltet werden können, so dass sie bei Beschädigung, Abnutzung oder Verlust der Elastizität ausgetauscht werden können. Ferner ist es möglich einheitliche Hängetaschengestelle bereit zu stellen und diese je nach Verwendungszweck mit unterschiedlichen Flächenelementen auszustatten, beispielsweise mit unterschiedlicher Bedruckung, Haltbarkeit, Flexibilität oder Elastizität.

Erfindungsgemäß sind der erste Taschenseitenwandbügel und der zweite Taschenseitenwandbügel schwenkbeweglich zum Öffnen der zweiten Öffnung verbunden. Bevorzugt erfolgt die Schwenkbewegung um die Gelenkverbindung mit Schwenkachse oder um eine weitere Gelenkverbindung mit Schwenkachse.

Bevorzugt ist die Gelenkverbindung mit Schwenkachse als Rastergelenk ausgebildet, wobei das Rastergelenk bevorzugt mit einem Drehbereich und einem Rasterbereich ausgebildet ist, wobei diese in einem entsprechend ausgebildeten Gelenkabschnitt des Anhängmittels angeordnet sind, wobei in Transportstellung der Rasterbereich in einem entsprechenden Rasterbereich des Gelenkabschnitts platziert ist, wodurch eine Schwenkbewegung des ersten Taschenseitenwandbügels gegenüber dem Anhängmittel blockiert ist, wobei durch eine Verschiebung des Rastergelenks der Rasterbereich von dem Rasterbereich des Gelenkabschnitts lösbar ist und der Drehbereich in einem Drehbereich des Gelenkabschnitts positionierbar ist, womit eine Schwenkbewegung des ersten Taschenseitenwandbügels gegenüber dem Anhängmittel freigegeben ist.

Bevorzugt ist der zweite Taschenseitenwandbügel elastisch vorgespannt, zu dem ersten Taschenseitenwandbügel zurückzuschwenken und/oder von diesem weg zu schwenken, insbesondere durch ein im Klappverbindungsbereich oder im weiteren Klappverbindungsbereich angeordnetes elastisches Element, bevorzugt durch eine Spiralfeder und/oder eine Schenkelfeder. Dadurch schließt sich die Hängetasche nach dem Herausfallen der Ware nach unten automatisch bzw. öffnet sich für das Herausfallen automatisch, ohne dass spezielle Vorrichtungen dafür vorgesehen werden müssen. Eine Schenkelfeder ist insbesondere bei der Ausführungsform mit Rasterklemme vorteilhaft, da das Lösen der Rasterklemme dann in Kombination mit der Schenkelfeder ein sofortiges Öffnen nach unten bewirkt.

Alternativ oder zusätzlich kann der zweite Taschenseitenwandbügel auch noch elastisch vorgespannt sein, bei Lösung des Rastmittels von dem ersten Taschenseitenwandbügel weg zu schwenken bzw. zurückzuschwenken, so dass sowohl Öffnen als auch Schließen nach unten durch elastische Kräfte bewirkt wird. Alternativ kann aber auch bei bekannten Gewichts- und Formparametern der bei der beabsichtigen Anwendung aufzunehmenden Gegenstände Rastmittel und Taschenseitenwandbügel so ausgelegt werden, dass bei Lösung des Rastmittels das Gewicht des Gegenstandes ein Wegschwenken des zweiten Taschenseitenwandbügels von dem ersten Taschenseitenwandbügels bewirkt.

Bevorzugt ist der erste Taschenseitenwandbügel aus zwei Bügelelementen gebildet, die in dem Klappverbindungsbereich oder dem weiteren Klappverbindungsbereich miteinander verbunden sind, wobei bevorzugt im zusammengeklappten Zustand das eine Bügelelement parallel zu dem Anhängmittel ist und/oder an diesem anliegt und das andere Bügelelement parallel zu dem zweiten Taschenseitenwandbügel ist und/oder an diesem anliegt.

Bevorzugt sind an den Taschenseitenwandbügeln und dem Anhängmittel Flächenelemente angeordnet, wobei bevorzugt ein erstes Flächenelement an dem ersten Taschenseitenwandbügel und ein zweites Flächenelement aus flexiblem Material an dem zweiten Taschenseitenwandbügel und dem Anhängmittel angeordnet und befestigt ist. Das erste Flächenelement kann ebenfalls flexibel, aber auch nicht flexibel, beispielsweise in Form einer Platte, ausgebildet sein.

Bevorzugt ist der Klappverbindungsbereich des ersten Taschenseitenwandbügels und des zweiten Taschenseitenwandbügels bevorzugt der Klappverbindungsbereich, in dem auch der erste Taschenseitenwandbügel mit dem Anhängmittel verbunden ist. Dadurch ist es insbesondere möglich, beide Schwenkvorgänge um die selbe Schwenkachse erfolgen zu lassen, womit nur eine Gelenkanordnung mit Schwenkachse erforderlich ist. Damit kann insbesondere die Gelenkanordnung mit Schwenkachse auf jeder Seite des Hängetaschengestells durch nur einen Stift oder ähnliches ausgebildet sein. Für bestimmte Anwendungen können aber auch separate Achsen und/oder separate Klappverbindungsbereiche für die beiden Schwenkbewegungen vorgesehen sein. Dadurch lässt sich insbesondere variieren, um welchen Winkel beim Öffnen der Hängetasche nach unten der erste bzw. der zweite Taschenseitenwandbügel geschwenkt werden muss.

Das Rastmittel, das den sicheren Verschluss nach unten hin gewährt, kann auf vielfältige Art und Weise ausgebildet sein. Bevorzugt ist es in Form eines am ersten oder zweiten Taschenseitenwandbügel ausgebildeten Laschenfortsatzes ausgebildet, in dem ein Rastabschnitt entsprechend des zweiten oder des ersten Taschenseitenwandbügels angeordnet werden kann, um eine Verrastung zu bewirken. Diese Art von Rastmittel lässt sich besonders einfach realisieren, da lediglich der eine Taschenseitenwandbügel in einem unteren Bereich umgebogen werden muss.

Bevorzugt weist das Rastmittel einen Entrastungsabschnitt auf, an dem die Verrastung durch eine Krafteinwirkung von außen lösbar ist. Dies hat den Vorteil, dass an einer entsprechenden Stelle einer Hängefördereinrichtung lediglich mechanische Mittel vorgesehen sein müssen, die entsprechend auf den Entrastungsabschnitt wirken, wodurch die beiden Taschenseitenwandbügel voneinander automatisch gelöst werden, wobei weitere mechanische Mittel im Bereich der Hängefördereinrichtung vorgesehen sein können, um das Auseinanderklappen automatisch zu bewirken, oder alternativ kann das Gewicht eines transportieren Gegenstandes das Auseinanderklappen bewirken.

Insbesondere kann ein solcher Entrastungsabschnitt in Form eines Bügelvorsprungs oder einer Bügelausnehmung am ersten oder am zweiten Taschenseitenwandbügel ausgebildet sein. Ein solcher Bügelvorsprung bzw. Bügelausnehmung bewirkt nämlich, dass in einem entsprechenden Bereich ein Taschenseitenwandbügel nach unten über den anderen hervorsteht, so dass in einfacher Weise eine Kraft von unten auf nur einen der beiden Taschenseitenwandbügel ausgeübt werden kann, wodurch die Entrastung durch Vorsehen von entsprechenden mechanischen Vorrichtungen im Bereich der Hängefördereinrichtung in einfacher Weise automatisch erfolgen kann.

Dabei ist der Taschenseitenwandbügel, auf dem dabei eine Kraft ausgeübt wird, also dieser kraftbeaufschlagbare Taschenseitenwandbügel bevorzugt mit einem elastischen Element weg von oder hin zu der Schwenkachse oder der weiteren Schwenkachse vorgespannt. Damit kann entsprechend sichergestellt werden, dass im unbeaufschlagten Zustand die Verrastung unter ausreichendem Kraftaufwand aufrechterhalten wird und nach einer Lösung der Verrastung, Auseinanderklappen und anschließendem Zusammenklappen der entsprechende Taschenseitenwandbügel wieder automatisch in die Verrastungsposition gelangt.

Alternativ oder zusätzlich kann das bzw. ein weiteres Rastmittel als Rasterklemme ausgebildet sein, wobei die Rasterklemme einen um einen Abschnitt des Bügelelements des ersten Taschenseitenwandbügels drehbaren Bereich aufweist, der mit einem Klemm- bzw. Hakenabschnitt verbunden ist, der einen Abschnitt des zweiten Taschenseitenwandbügels wenigstens teilweise umgreift, wobei die Rasterklemme ferner einen Betätigungsabschnitt aufweist, durch dessen Betätigung eine Drehbewegung der Rasterklemme bewirkbar ist, wodurch der Klemm- bzw. Hakenabschnitt von dem Abschnitt des zweiten Taschenseitenwandbügels gelöst wird. Dadurch lässt sich eine Öffnung der Tasche nach unten einfach realisieren, indem während der Bewegung der Hängetasche ein Hindernis im Pfad des Betätigungsabschnitts platziert wird, womit die Fahrbewegung der Hängetasche unmittelbar zur Krafteinwirkung und Betätigung und damit zum Lösen des Rastmittels führt. Alternativ können auch Vorrichtungen, die gezielt eine Kraft auf den Betätigungsabschnitt ausüben, vorgesehen werden, beispielsweise pneumatische Elemente. Die Rasterklemme ist dabei bevorzugt aus einem Material mit geeigneter Elastizität, insbesondere aus Kunststoff.

Es können auch zwei oder mehr Rastmittel, insbesondere Rasterklemmen, vorgesehen sein.

Bevorzugt ist der erste Taschenseitenwandbügel aus zwei Bügelelementen gebildet, die in dem Klappverbindungsbereich oder dem weiteren Klappverbindungsbereich miteinander verbunden sind. Dies ermöglicht es, die beiden Bügelelemente des ersten Taschenseitenwandbügels zueinander entsprechend versetzt anzuordnen, damit die beiden Taschenseitenwände, von denen die erste bevorzugt an beiden Bügelelementen des ersten Taschenseitenwandbügels und die zweite an dem zweiten Taschenseitenwandbügel und dem Anhängmittel angeordnet ist, in der Schließstellung jeweils an beiden Enden aneinander anliegen, damit die Hängetasche ausreichend geschlossen ist.

Dabei ist bevorzugt im zusammengeklappten Zustand das eine Bügelelement des ersten Taschenseitenwandbügels parallel zu dem zweiten Taschenseitenwandbügel und/oder liegt entsprechend an diesem an. Bevorzugt ist das andere Bügelelement des ersten Taschenseitenwandbügels parallel zu dem Anhängmittel und/oder liegt entsprechend an diesem an. Dadurch ist ein optimaler Verschluss der Hängetasche im geschlossen Zustand sichergestellt.

Erfindungsgemäß kann ein erfindungsgemäßes Hängetaschengestell für eine Hängetasche verwendet werden, wobei entsprechend Flächenelemente an den Taschenseitenwandbügeln und dem Anhängmittel angeordnet werden. Durch entsprechende Anordnung von Flächenelementen kann eine Hängetasche ausgebildet werden, die sich bezogen auf den Punkt der Aufhängung sowohl nach unten hin, als auch durch entsprechendes Klappen zur Seite hin öffnen lässt.

Bevorzugt ist dabei eine erste Taschenseitenwand an dem ersten Taschenseitenwandbügel angeordnet, die insbesondere sowohl aus hartem, als auch aus flexiblem Material bestehen kann, und eine zweite Taschenseitenwand, die bevorzugt aus flexiblem Material besteht, kann an dem zweiten Taschenseitenwandbügel und dem Anhängmittel angeordnet werden. Durch Anordnung bzw. Befestigung von Seitenwänden in dieser Art an dem Hängetaschengestell kann eine Hängetasche ausgebildet werden, die ausreichend stabil ist und gleichzeitig ausreichend flexibel, um in der beschriebenen Art und Weise geöffnet zu werden.

Erfindungsgemäß kann eine erfindungsgemäße Hängetasche, insbesondere eine mit dem erfindungsgemäßen Hängetaschengestell ausgebildete, in einer Hängefördereinrichtung verwendet werden. Dabei können insbesondere auch mehrere und insbesondere auch eine Vielzahl von erfindungsgemäßen Hängetaschen in einer Hängefördereinrichtung verwendet werden. Insbesondere können auch alle Hängetaschen einer Hängefördereinrichtung in der erfindungsgemäßen Weise ausgebildet sein.

Eine solche erfindungsgemäße Hängefördereinrichtung umfasst mindestens eine Führungsschienenanordnung, an der die mindestens eine Hängetasche geführt bewegbar ist, wobei die mindestens eine Hängetasche durch die Führungsschienenanordnung an mindestens einem Arbeitsplatz vorbeiführbar ist, an dem Betätigungsvorrichtungen vorgesehen sind, die geeignet sind, auf die Taschenseitenwandbügel einzuwirken, um eine Schwenkbewegung des ersten und des zweiten Taschenseitenwandbügels und/oder eine Schwenkbewegung des ersten Taschenseitenwandbügels und des Anhängmittels und/oder ein Entrasten und/oder Verrasten des Rastmittels und/oder eine Drehung und/oder Tordierung der mindestens einen Hängetasche zu bewirken. Dadurch kann in effizienter Weise eine Hängefördereinrichtung aufgebaut werden, mit der entsprechend Waren zu Arbeitsplätzen zugeführt oder weggeführt werden. Hierbei ist die Drehung der mindestens einen Hängetasche insbesondere auch so zu verstehen, dass eine Drehung des Fördergutaufnahmebereichs um eine Achse erfolgt, die senkrecht ist bzw. in der Fläche liegt, die im zusammengeklappten Zustand durch die Taschenseitenwandbügel aufgespannt wird. Eine solche Drehung erlaubt es zu bestimmen, in welche Richtung die geförderte Ware ausgegeben wird, wodurch sich noch effizienter und platzsparender bestimmte Arbeitsbereiche ansteuern und mit Ware beliefern lassen. Alternativ kann auch eine entsprechende Tordierung erfolgen.

Bevorzugt sind an mindestens einem Arbeitsplatz mehrere Betätigungsvorrichtungen vorgesehen, um ein Be- und/oder Entladen hin zu verschiedenen Unterbereichen des Arbeitsbereichs und/oder auch zu anderen Arbeitsbereichen hin zu erlauben. Durch das Vorsehen von mehreren Betätigungsvorrichtungen, die in der vorher beschriebenen Weise ein Entrasten und/oder Schwenken von entsprechenden Taschenseitenwandbügeln bewirken, kann ein automatisiertes, platzsparendes und energiesparendes Transportieren von und zu den Arbeitsplätzen durch die erfindungsgemäße Hängefördereinrichtung realisiert werden.

Entsprechende Arbeitsplätze einer erfindungsgemäßen Hängefördereinrichtung können insbesondere Sortier-, Pack-, Be- und/oder Entladestationen und/oder Transportmittel wie Rutschen, Rollen und/oder Förderbänder umfassen. Durch die geeignete Kombination dieser Elemente lassen sich eine Vielzahl von erfindungsgemäßen Hängefördereinrichtungen für verschiedenste betriebliche Zwecke realisieren.

Die oben bereits beschriebenen Ausbildungen der Rastmittel durch mindestens einen gebogenen Laschenfortsatz einer Taschenseitenwand und dazu komplementären Rastabschnitt der anderen Taschenseitenwand bzw. durch Ausbildung als Rasterklemme kommt dabei auch eigenständige Bedeutung zu.

Denn neben dem vorteilhaften Einsatz bei oben beschriebener Hängetasche mit oberer und unterer Öffnung können die beiden erfindungsgemäßen Rastmittel auch vorteilhaft bei anderen Taschen, insbesondere Hängetaschen, mit mindestens einer Öffnung eingesetzt werden, beispielsweise bei Hängetaschen, die der oben beschriebenen ähneln, aber nur eine untere Öffnung aufweisen. Entsprechend ist ein weiterer Aspekt der vorliegenden Erfindung eine entsprechend ausgebildete Tasche mit entsprechenden Rastmitteln.

Diese erfindungsgemäßen Taschen können dabei insbesondere auch als eine beliebige Kombination der entsprechenden bezüglich der Hängetasche mit oberer und unterer Öffnung genannten Merkmale ausgebildet sein. Dies gilt insbesondere hinsichtlich des Öffnens der unteren Öffnung und der zugehörigen Verbindung der beiden Taschenseitenwände.

Diese erfindungsgemäßen Taschen verbindet dabei erfinderisch mit den oben erläuterten erfindungsgemäßen Hängetaschen mit oberere und unterer Öffnung, dass die vorteilhafte Ausbildung der Rastmittel jeweils ein Entleeren der Tasche bzw. Hängetasche erleichtert, insbesondere ein automatisiertes, bei dem mechanisch an geeigneter Stelle eine Kraft auf das Rastmittel ausgeübt wird, wodurch sich die entsprechende Öffnung öffnet.

Unter Bezugnahme auf die Figuren wird nachstehend ein Ausführungsbeispiel der Erfindung mit einer bestimmten Merkmalskombination dargestellt.
- Figuren 1a und 1b: zeigen ein erfindungsgemäßes Hängetaschengestell aus verschiedenen Blickwinkeln.
- Figuren 2a - 2d: zeigen eine erfindungsgemäße Hängetasche ausgebildet mit einem erfindungsgemäßen Hängetaschengestell in Beladeposition (a), Transportposition (b), erster Entladeposition (c) und zweiter Entladeposition (d).
- Figur 3: zeigt ein Rastergelenk für das Drehen einer erfindungsgemäßen Hängetasche in die Belade- und Entladepositionen.
- Figur 4a und 4b: zeigen ein Ausführungsbeispiel mit einer Rasterklemme für das Öffnen und Schließen hinsichtlich der zweiten Entladeposition, wobei Figur 4b eine Schnittansicht entsprechend der gestrichelten Linie in Richtung des Pfeils in Figur 4a ist.
- Figur 5: zeigt eine erfindungsgemäße Hängefördereinrichtung mit erfindungsgemäßen Hängetaschen in einer schematischen Draufsicht.

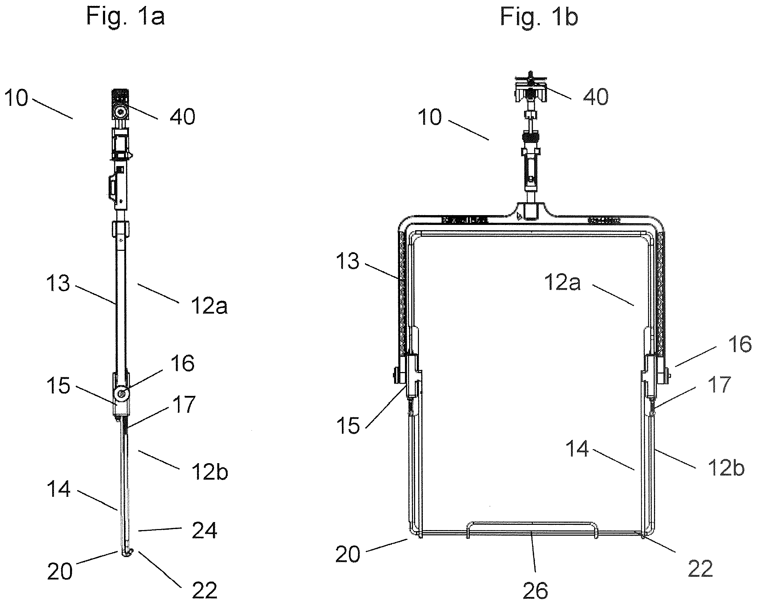

Wie in Figur 1a und Figur 1b gezeigt, umfasst das erfindungsgemäße Hängetaschengestell 10 einen ersten Taschenseitenwandbügel 12a, 12b, ein Anhängmittel 13 und einen zweiten Taschenseitenwandbügel 14. Diese sind in einem Klappverbindungsbereich 15 über eine Gelenkanordnung mit Schwenkachse 16 schwenkbar miteinander verbunden. Die Gelenkanordnung mit Schwenkachse 16 ist dabei so ausgebildet, dass eine Krafteinwirkung, die zum Verschwenken des zweiten Taschenseitenwandbügels 14 gegenüber dem ersten Taschenseitenwandbügel 12a, 12b führt, keine Verschwenkung des ersten Taschenseitenwandbügels 12a, 12b gegenüber dem Anhängmittel 13 bewirkt.

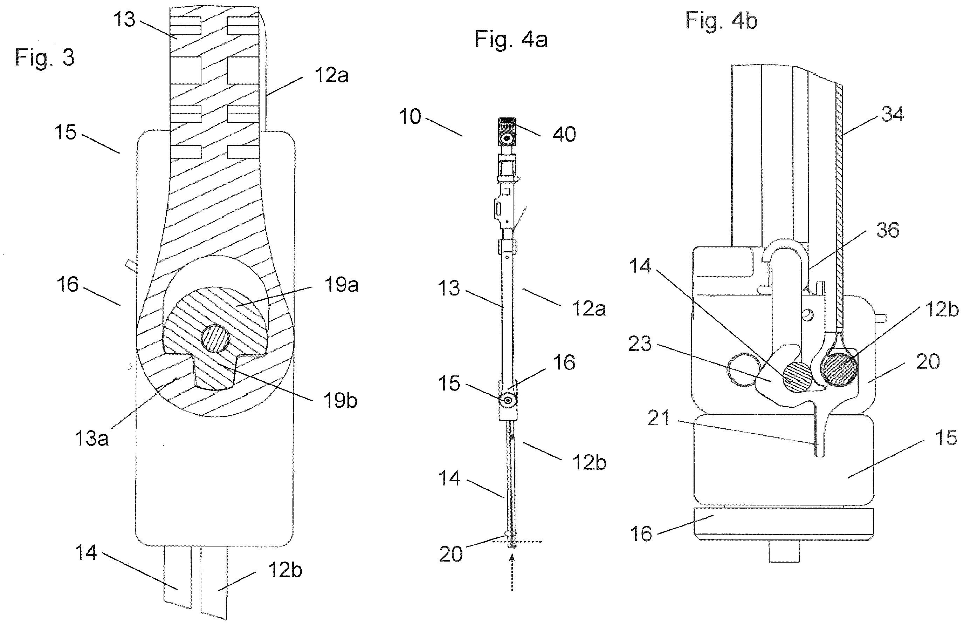

Für die Gelenkanordnung mit Schwenkachse 16 kann, wie in Figur 3 gezeigt, insbesondere ein Rastergelenk 16 genutzt werden bzw. die Gelenkanordnung mit Schwenkachse 16 kann als Rastergelenk 16 ausgebildet sein. Wie ersichtlich ist das Rastergelenk 16 mit einem halbkreisförmigen Drehbereich 19a und einem Rasterbereich 19b ausgebildet. Diese sind in einem entsprechend ausgebildeten Gelenkabschnitt 13a des Anhängmittels 13 angeordnet, wobei in Transportposition der Rasterbereich 19b durch das Taschengewicht in einem entsprechenden Rasterbereich des Gelenkabschnitts 13a platziert bzw. positioniert bzw. fixiert ist, wodurch es keine Schwenkbewegung des ersten Taschenseitenwandbügels 12a, 12b gegenüber dem Anhängmittel 13 geben kann. Soll eine solche Schwenkbewegung durchgeführt werden, werden der erste Taschenseitenwandbügel 12a, 12b und der zweite Taschenseitenwandbügel 14 bzw. die Gelenkanordnung mit Schwenkachse 16 angehoben bzw. nach oben gedrückt, so dass der Rasterbereich 19b den Rasterbereich des Gelenkabschnitts 13a verlässt und der halbkreisförmige Drehbereich 19a in dem entsprechenden halbkreisförmigen Drehbereich des Gelenkabschnitts 13a platziert ist, womit der erste Taschenseitenwandbügel 12a, 12b gegenüber dem Anhängmittel 13 verschwenkt werden kann.

Wie ersichtlich, ist das Anhängmittel 13 stabiler als die Taschenseitenwandbügel ausgebildet, da es an seinem oberen Ende mit einem Förderverbindungsmittel 40 (hier eine Rollenanordnung) mit einer Hängefördereinrichtung 100 verbindbar ist und somit das ganze Gewicht des Hängetaschengestells 10 tragen muss. Ferner ist das Anhängmittel 13 über ein Drehgelenk oder ein tordierbares Element mit dem Förderverbindungsmittel 40 verbunden. Dies kann insbesondere ein Gummielement sein. Damit ist der Bereich des Hängetaschengestells, der zur Ausbildung eines Fördergutaufnahmebereichs 30 vorgesehen ist, gegenüber dem Förderverbindungsmittel 40 um eine vorzugsweise vertikale Achse entsprechend drehbar bzw. tordierbar.

Der erste Taschenseitenwandbügel 12a, 12b ist aus zwei Bügelelementen 12a, 12b gebildet, die in dem Klappverbindungsbereich 15 miteinander verbunden sind bzw. die jeweils mit dem Klappverbindungsbereich 15 verbunden sind. Durch einen entsprechenden Versatz ist sichergestellt, dass das eine Bügelelement 12a im zusammengeklappten Zustand entsprechend nahe an dem Anhängmittel 13 positioniert ist, damit eine entsprechend ausgebildete Hängetasche 50 oben verschlossen ist. Durch diesen geeigneten Versatz ist gleichzeitig das andere Bügelelement 12b im zusammengeklappten Zustand so angeordnet, dass die entsprechend ausgebildete Hängetasche 50 nach unten hin ausreichend verschlossen ist.

Das Rastmittel 20 ist in dem gezeigten Ausführungsbeispiel im Wesentlichen durch eine entsprechende Form des zweiten Taschenseitenwandbügels 14 ausgebildet, es sind nämlich am unteren Ende des zweiten Taschenseitenwandbügels 14 an beiden Seiten zwei Laschenfortsätze 22 ausgebildet, die das untere Ende des ersten Taschenseitenwandbügels außen umgreifen und eine entsprechende Verrastung bewirken. Gleichzeitig weist der zweite Taschenseitenwandbügel 14 im unteren Bereich mittig eine Bügelausnehmung 26 auf, an der im zusammengeklappten und eingerasteten Zustand der erste Taschenseitenwandbügel 12a, 12b über den zweiten Taschenseitenwandbügel 14 hervorsteht, so dass an dieser Stelle eine Kraft so ausgeübt werden kann, dass sie nur auf den ersten Taschenseitenwandbügel 12a, 12b ausgeübt wird. Da das untere Bügelelement 12b des ersten Taschenseitenwandbügels 12a, 12b in einem in dem Klappverbindungsbereich 15 ausgebildeten Langloch verschiebbar ausgebildet ist und mit einem elastischen Element 17, hier eine Feder 17, entsprechend vorgespannt ist, kann durch die Kraftausübung entgegen der Kraftwirkung der Feder 17 das entsprechende Bügelelement 12b des ersten Taschenseitenwandbügels 12a, 12b über den Laschenfortsatz 22 des zweiten Taschenseitenwandbügels 14 angehoben werden, wodurch die Verrastung gelöst ist, und der zweite Taschenseitenwandbügel 14 gegenüber dem ersten Taschenseitenwandbügel 12a, 12b geschwenkt werden kann.

Beim Zusammenklappen muss dann entsprechend wieder auf das Bügelelement 12b des ersten Taschenseitenwandbügels 12a, 12b eine Kraft ausgeübt werden, so dass das Bügelelement 12b des ersten Taschenseitenwandbügels 12a, 12b wieder über den Laschenfortsatz 22 des zweiten Taschenseitenwandbügels 20 angehoben wird, wodurch die beiden Taschenseitenwandbügel 12a, 12b, 14 vollständig zusammengeklappt werden können. Bei anschließendem Wegfall der Kraft sorgt das am entsprechenden Bügelelement 12b des ersten Taschenseitenwandbügels 12a, 12b angeordnete elastische Element 17 für eine erneute Verrastung des ersten Taschenseitenwandbügels 12a, 12b.

In alternativen Ausführungsbeispielen kann auch der Laschenfortsatz 22 oder allgemein das Rastmittel 20 so ausgebildet sein, dass eine Kraftwirkung rein in Schwenkrichtung ausreichend ist, um eine erneute Verrastung zu bewirken. Dies kann beispielsweise erfolgen, indem das Ende des gebogenen Laschenfortsatzes 22 so ausgebildet ist, dass beim Zurückklappen beispielsweise durch einen entsprechenden Schrägbereich das Bügelelement 12b des ersten Taschenseitenwandbügels 12a, 12b eine bezogen auf die Figuren automatische Kraft nach oben erfährt und so die Federkraft zuerst überwunden wird, woraufhin beim Erreichen des vollständigen Zusammenklappens die Federkraft eine entsprechende erneute Verrastung durch Hinunterdrücken des Bügelelements 12b bewirkt.

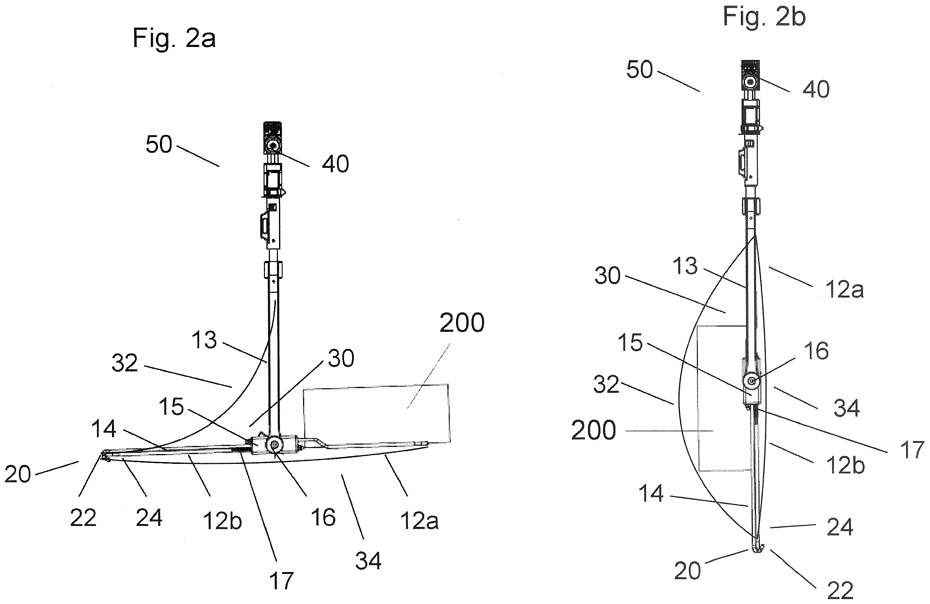

Wie in den Figuren 2a - 2d gezeigt, kann eine erfindungsgemäße Hängetasche 50 mit Hilfe eines erfindungsgemäßen Hängetaschengestells 10 einfach ausgebildet werden, indem entsprechende Flächenelemente 32, 34 an dem ersten Taschenseitenwandbügel 12a, 12b bzw. an dem zweiten Taschenseitenwandbügel 14 und dem Anhängmittel 13 aufgespannt werden. In den Figuren nicht gezeigt ist, dass selbstverständlich die Flächenelemente 32, 34 nicht nur oben und unten befestigt sein können, sondern auch einen seitlichen Bereich aufweisen können, der entsprechend seitlich an dem Hängetaschengestell 10 befestigt ist, so dass sich ein in Transportstellung vollständig geschlossener Fördergutaufnahmebereich 30 einer Hängetasche 50 ausbildet. Bei bestimmten Anwendungen kann aber auch ein seitlich offener Fördergutaufnahmebereich 30 ausreichend sein, insbesondere wenn die zu transportierenden Waren 200 eine Größe innerhalb ausreichend enger Grenzen aufweisen, so dass durch geeignete Wahl der Elastizität der Flächenelemente 32, 34 die Waren 200 trotz seitlich offenem Fördergutaufnahmebereich 30 sicher durch die Klemmwirkung positioniert sind.

Selbstverständlich kann eine erfindungsgemäße Hängetasche 50 auch anders als unter Verwendung des erfindungsgemäßen Hängetaschengestells 10 ausgebildet werden. Beispielsweise kann statt dem ersten Taschenseitenwandbügel 12a, 12b und dem zugehörigen Flächenelement 32 ein Tablett vorgesehen werden. Oder es kann ein Teilbereich mit Bügel und Flächenelement ausgebildet sein und ein anderer Teil als Tablett mit Rand. Insbesondere kann auch eine Hängetasche im Sinne der WO 2014/012965 A1 ergänzt um die zweite Öffnung nach unten gemäß vorliegender Erfindung ausgebildet werden, in dem ein Flächenelement 34 als Tablett mit einem starren Randkonturbereich ausgebildet ist.

Bei einigen Anwendungen genügt es aber auch entsprechend elastische Flächenelemente 32, 34 nur oben und unten an dem Hängetaschengestell 10 zu befestigen, denn wenn eine Ware 200 von entsprechender Größe wie in der in Figur 2a gezeigten Weise in die Hängetasche 50 eingeführt wird, kann sich bei ausreichender Größe von selbst eine entsprechende Klemm- bzw. Einspannwirkung ergeben, die die Ware 200 sicher zwischen den beiden Seitenwänden 32, 34 positioniert.

Die in Figur 2a gezeigte Position eignet sich besonders zum Beladen der Hängetasche 50 und ist bereits aus dem Stand der Technik bekannt. Durch eine nicht gezeigte Vorrichtung wird ein Verschwenken des gesamten ersten Taschenseitenwandbügels 12a, 12b und damit aufgrund der Verrastung des Rastmittels 20 auch des zweiten Taschenseitenwandbügels 14 gegenüber dem Anhängmittel 13 bewirkt. Dadurch trennt sich das Bügelelement 12a des ersten Taschenseitenwandbügels 12a, 12b von dem Anhängmittel 13, wodurch eine Öffnung der Flächenelemente 32 und 34 entsteht, durch die eine Ware 200 in die Hängetasche 50 eingeführt werden kann. Dabei ist für die Befüllung durch eine menschliche Arbeitskraft oder in automatisierter Weise vorzugsweise eine waagrechte Position des einen Flächenelements 34 des Fördergutaufnahmebereichs 30 vorgesehen, wodurch die Ware 200 einfach eingeschoben werden kann.

Als nächstes wird durch entsprechende, nicht weiter gezeigte Vorrichtungen oder auch durch entsprechende im Klappverbindungsbereich vorgesehene Rückstellmittel der erste Taschenseitenwandbügel 12a, 12b vollständig in die Ausgangsposition zurückgedreht, wodurch der Fördergutaufnahmebereich 30 wieder in der in Figur 2b gezeigten Weise geschlossen ist. In diesem Zustand kann die Hängetasche 50 durch geeignete Lagerung mit Hilfe des Förderverbindungsmittels 40 an einer Führungsschienenanordnung 102 entsprechend transportiert werden. Alternativ kann aber auch die Hängetasche 50 beispielsweise durch entsprechend schwerere Bereiche so ausgebildet sein, dass nach Wegfall der Rückstellkraft der erste Taschenseitenwandbügel 12a, 12b durch eine entsprechende Position des Schwerpunktes bevorzugt in Kombination mit dem Gewicht der Ware 200 von selbst in die Transportstellung zurückschwenkt.

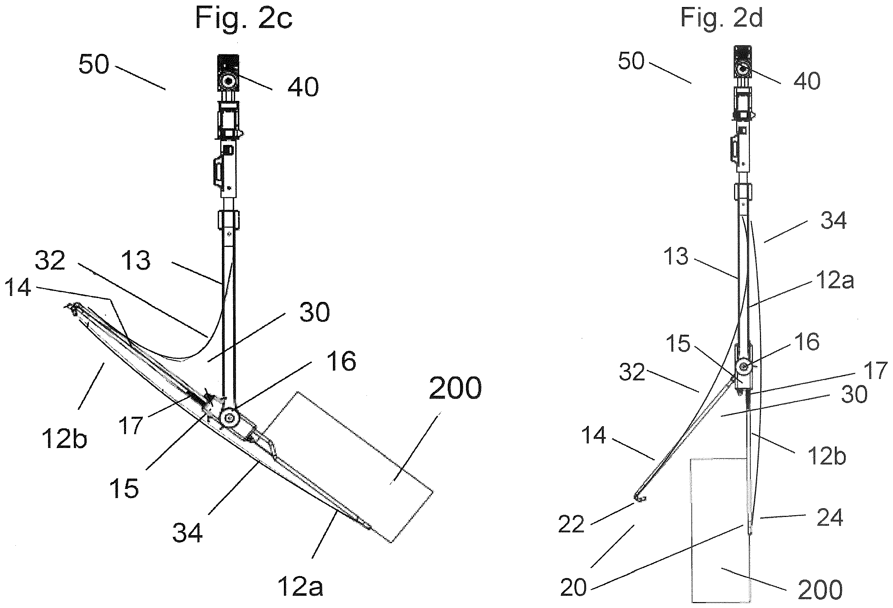

In einem Bereich, in dem die Ware 200 entladen werden soll, kann der Fördergutaufnahmebereich 30 der Hängetasche 50 entweder, wie in Figur 2c gezeigt, durch erneutes Verschwenken des ersten Taschenseitenwandbügels 12a, 12b geöffnet werden. Wie in Figur 2c gezeigt, wird dabei bevorzugt ein Verschwenken über die Waagrechte hinaus durchgeführt, da dann die Ware 200 durch die Schwerkraft von selbst aus dem Fördergutaufnahmebereich 30 der Hängetasche 50 herausrutschen kann.

Alternativ kann bei der erfindungsgemäßen Hängetasche 50 aber auch, wie in Figur 2d gezeigt, der Fördergutaufnahmebereich 30 der Hängetasche 50 nach unten geöffnet werden. Dafür wird eine Kraft von unten her auf den auf das Bügelelement 12b des ersten Taschenseitenwandbügels 12a, 12b im Bereich des Entrastungsabschnitts 26 ausgeübt. Dadurch wird das Bügelelement 12b entgegen der Federkraft entlang des nicht gezeigten Langlochs im Klappverbindungsbereich 15 nach oben verschoben, wodurch es nicht mehr vom gebogenen Laschenfortsatz 22 des zweiten Taschenseitenwandbügels 14 außen umgriffen wird, womit die Verrastung gelöst ist. Anschließend wird durch eine nicht näher gezeigte Vorrichtung eine Kraft auf den zweiten Taschenseitenwandbügel 14 in seitlicher Richtung ausgeübt, wodurch dieser gegenüber dem Bügelelement 12b des ersten Taschenseitenwandbügels 12a, 12b in der gezeigten Weise verschwenkt. Wie ersichtlich, ist dadurch die Hängetasche nach unten geöffnet und die Ware 200 kann nach unten hinausrutschen. Alternativ kann ein solches Verschwenken auch manuell oder aufgrund des Gewichts der Ware 200 erfolgen.

Wie aus den Figuren 2c und 2d erkennbar, erlaubt diese alternative Öffnungsmöglichkeit nach unten ein Öffnen mit erheblich weniger Platzaufwand, da nur der zweite Taschenseitenwandbügel 14 um einen geringen Winkel zur Seite hin verschwenkt werden muss. Gleichzeitig verlässt die Ware 200 den Fördergutaufnahmebereich 30 an einer Stelle, die weiter unten liegt als im Fall der Figur 2c.

Eine alternative Ausbildung des Rastmittels 20 als Rasterklemme 20 zeigen Figur 4a und 4b. Dabei ist, wie an der Seitenansicht in Figur 4a zu sehen ist, kein elastisches Element 17 und kein Laschenfortsatz 22 vorgesehen, sondern die Taschenseitenwandbügel 12a, 12b und 14 sind vielmehr durch eine Klammerung gegeneinander fixiert, wobei im gezeigten Ausführungsbeispiel eine seitliche Klammerung vorgesehen ist.

Das Rastmittel 20 weist einen um einen Abschnitt des Bügelelements 12b des ersten Taschenseitenwandbügels 12a, 12b drehbaren Bereich auf, der mit einem Klemm- bzw. Hakenabschnitt 23 verbunden ist, der einen Abschnitt des zweiten Taschenseitenwandbügels 14 wenigstens teilweise umgreift. Dadurch sind der erste Taschenseitenwandbügel 12a, 12b und der zweite Taschenseitenwandbügel 14 aneinander fixiert und eine mit dem Hängetaschengestell 10 ausgebildete Hängetasche nach unten geschlossen.

Für das Öffnen der Hängetasche nach unten weist das Rastmittel 20 ferner einen Betätigungsabschnitt 21 auf, der ausreichend weit vorsteht, damit er leicht automatisiert betätigt werden kann. Eine ausreichend große Kraftausübung auf diesen bewirkt eine Drehbewegung des Rastmittels 20, wodurch der Klemm- bzw. Hakenabschnitt 23 von dem Abschnitt des zweiten Taschenseitenwandbügels 14 gelöst wird, womit ein Öffnen der Hängetasche nach unten ermöglicht ist. Das Material und die Form der Rasterklemme 20 und insbesondere des Klemm- bzw. Hakenabschnitts 23 bestimmt dabei die erforderliche Kraft.

In alternativen Ausführungsbeispielen kann der Klemm- bzw. Hakenabschnitt 23 den Abschnitt des zweiten Taschenseitenwandbügels 14 auch von unten oder von oben her umgreifen, so dass die Achse der Drehbewegung des Rastmittels 20 nicht in der Bildebene von Figur 4a liegt sondern orthogonal dazu verläuft.

Es können auch mehrere Rasterklemmen 20 vorgesehen werden, beispielsweise in symmetrischer Weise an jeder Seite des Hängetaschengestells 10 eine.

In Figur 4b ist ebenfalls die Schenkelfeder 36 erkennbar, die eine Kraft zum Wegspreizen des Taschenseitenwandbügels 14 von dem ersten Taschenseitenwandbügel 12a, 12b bewirkt, so dass im Falle des Lösens des Rastmittels 20 bzw. der Rasterklemme 20 eine Öffnung äquivalent zu der in Figur 2d gezeigten nach unten erfolgt.

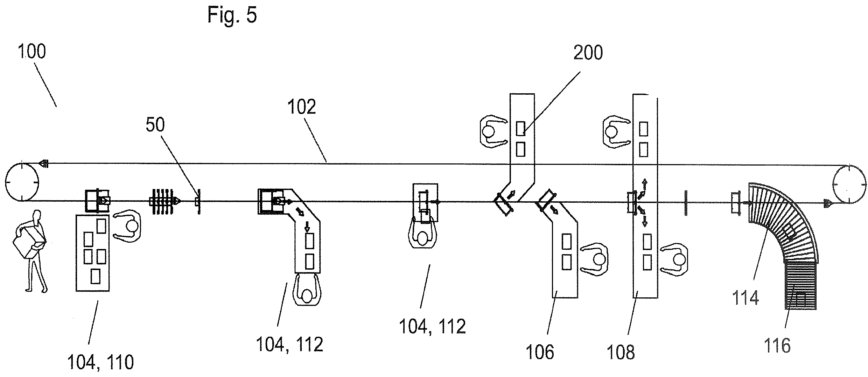

Wie in Figur 5 gezeigt, lässt sich die erfindungsgemäße Hängetasche 50 vorteilhaft in einer Hängefördereinrichtung 100 nutzen, indem von beiden Möglichkeiten zum Öffnen des Fördergutaufnahmebereichs 30 entsprechend den Anforderungen der verschiedenen Arbeitsplätze 104 Gebrauch gemacht wird.

So kann an einer Beladestation 110 die Hängetasche 50 in der in Figur 2a gezeigten Weise verkippt werden, wodurch eine Bedienperson die Waren in die Hängetasche 50 einfach einladen kann. Den Verlauf der Führungsschienenanordnung 102 der Hängefördereinrichtung 100 folgend können an einer weiteren Stelle die Hängetaschen 50 gestaut werden, um entsprechend nur dann Hängetaschen 50 entlang der Führungsschienenanordnung 102 zu bewegen, wenn dies erforderlich ist. An entsprechenden Entladestellen 112 kann dann einerseits ein Entladen durch einen Verkippvorgang wie in Fig. 2c gezeigt erfolgen, wobei dann eine entsprechende Rutsche vorgesehen sein kann, um die Ware endgültig zum Arbeitsplatz zu transportieren. Alternativ kann auch in der in Figur 2d gezeigten Weise der Fördergutaufnahmebereich 30 unmittelbar nach unten geöffnet werden, womit unmittelbar unterhalb der Hängefördereinrichtung 100 eine entsprechende Entladestation 112 vorgesehen sein kann. Wie in der Figur 5 dargestellt, kann dabei insbesondere auf entsprechende Rutschen verzichtet werden. Wie im weiteren Verlauf der Führungsschienenanordnung 102 gezeigt, kann aufgrund der Drehbarkeit oder Tordierbarkeit des Anhängmittels 13 gegenüber dem Förderverbindungsmittel 40 die Hängetasche 50 bereits so gedreht oder tordiert werden, dass die entsprechende Rutsche, die die Ware 200 zu einem Unterbereich 106 eines Arbeitsplatzes 104 führt, die Ware 200 nicht um eine vollständige 90°-Kurve führen muss. Dadurch lässt sich zusätzlicher Platz einsparen.

Wie im weiteren Verlauf der Führungsschienenanordnung 102 gezeigt, kann durch die unmittelbare Öffnung nach unten entsprechend Figur 2d auch die Ware 200 direkt auf einen sortierenden Rutschenbereich ausgegeben werden, der beispielsweise anhand der Form der Ware 200 diese zum entsprechenden Unterbereich 108 des Arbeitsplatzes 104 hinführt. Ferner kann, wie gezeigt, bei beiden Entlademethoden auch eine größere Rutsche 114 mit einem anschließenden Förderband 116 vorgesehen sein, um beispielsweise Waren 200 zu einer weiteren Hängefördereinrichtung 100 oder auch zur weiteren Verarbeitung oder weitergehenden Transport, beispielsweise per LKW, zu transportieren.

## Patentansprüche

1. Hängetasche (50) als Fördergutbehälter zum Transport von Fördergut (200) in einer Hängefördereinrichtung (100), mit einem Anhängmittel (13) und mit einer ersten Taschenseitenwand (12a, 12b, 34) und einer zweiten Taschenseitenwand (13, 14, 32), die einander gegenüberliegend einen Fördergutaufnahmebereich (30) mit einer ersten Öffnung zwischen sich begrenzen und in einem Klappverbindungsbereich (15) so miteinander verbunden sind, dass sie auseinanderklappbar sind und zusammenklappbar sind, um die erste Öffnung aufzuweiten oder zu verengen, wobei das Anhängmittel (13) zum Anhängen der Hängetasche (50) in einer Transportstellung mit obenliegender etster Öffnung an eine Hängefördereinrichtung (100) ausgebildet ist, wobei die erste Taschenseitenwand (12a, 12b, 34) und die zweite Taschenseitenwand (13, 14, 32) in der Transportstellung so relativ zueinander bewegbar sind, dass sie eine zweite Öffnung des Fördergutaufnahmebereichs (30) am unteren Ende der Hängetasche (50) bilden, **dadurch gekennzeichnet, dass** die erste Taschenseitenwand (12a, 12b, 34) zumindest einen starren Randkonturbereich aufweist und daran schwenkbeweglich um eine in der Transportstellung der Hängetasche (50) horizontal verlaufende Schwenkachse mit dem Anhängmittel (13) verbunden ist und dass die zweite Taschenseitenwand (13, 14, 32) an einer von der Schwenkachse und dem Klappverbindungsbereich (15) entfernten Stelle mit dem Anhängmittel (13) verbunden oder davon beaufschlagbar ist, derart, dass durch Schwenken der ersten Taschenseitenwand (12a, 12b, 34) um die Schwenkachse die Taschenseitenwände (12a, 12b, 34; 13, 14, 32) auseinanderklappbar und zusammenklappbar sind, um die erste Öffnung aufzuweiten und zu verengen.

2. Hängetasche (50) nach Anspruch 1, **dadurch gekennzeichnet, dass** die erste Taschenseitenwand (12a, 12b, 34) und die zweite Taschenseitenwand (13, 14, 32) in dem Klappverbindungsbereich (15) oder einem weiteren Klappverbindungsbereich so miteinander verbunden sind, dass sie auseinanderklappbar sind und zusammenklappbar sind, um die zweite Öffnung aufzuweiten oder zu verengen.

3. Hängetasche (50) nach Anspruch 2, **dadurch gekennzeichnet, dass** die erste Taschenseitenwand (12a, 12b, 34) und die zweite Taschenseitenwand (13, 14, 32) jeweils ein oberes Taschenseitenwandelement (12a; 13) und ein unteres Taschenseitenwandelement (12b; 14) umfassen, wobei beim Auseinanderklappen zum Aufweiten der ersten Öffnung die oberen Taschenseitenwandelemente (12a, 13) und beim Auseinanderklappen zum Aufweiten der zweiten Öffnung die unteren Taschenseitenwandelemente (12b; 14) auseinanderklappen.

4. Hängetasche (50) nach einem der vorhergehenden Ansprüche, **dadurch gekennzeichnet, dass** die erste Taschenseitenwand (12a, 12b, 34) und die zweite Taschenseitenwand (13, 14, 32) durch ein Rastmittel (20) miteinander so verrastet sind, dass bei Lösung des Rastmittels (20) die erste Taschenseitenwand (12a, 12b, 34) und die zweite Taschenseitenwand (13, 14, 32) in der Transportstellung so relativ zueinander bewegbar sind, dass die zweite Öffnung aufweitbar ist.

5. Hängetasche (50) nach Anspruch 4, **dadurch gekennzeichnet, dass** das Rastmittel (20) durch mindestens einen gebogenen Laschenfortsatz (22) der ersten Taschenseitenwand (12a, 12b, 34) oder der zweiten Taschenseitenwand (13, 14, 32) ausgebildet ist, in dem ein Rastabschnitt (24) entsprechend der zweiten Taschenseitenwand (13, 14, 32) oder der ersten Taschenseitenwand (12a, 12b, 34) anordnenbar ist, um eine Verrastung zu bewirken.

6. Hängetasche (50) nach Anspruch 4, **dadurch gekennzeichnet, dass** das Rastmittel (20) als Rasterklemme (20) ausgebildet ist, wobei die Rasterklemme (20) einen um einen Abschnitt der ersten bzw. der zweiten Taschenseitenwand (12a, 12b) drehbaren Bereich aufweist, der mit einem Klemm- bzw. Hakenabschnitt (23) verbunden ist, der einen Abschnitt der zweiten bzw. der ersten Taschenseitenwand (13, 14) wenigstens teilweise umgreift, wobei die Rasterklemme (20) ferner einen Betätigungsabschnitt (21) aufweist, durch dessen Betätigung eine Drehbewegung der Rasterklemme (20) bewirkbar ist, wodurch der Klemm- bzw. Hakenabschnitt (23) von dem Abschnitt der zweiten bzw. der ersten Taschenseitenwand (13, 14) gelöst wird.

7. Hängetasche (50) nach Anspruch 4, 5 oder 6, **dadurch gekennzeichnet, dass** das Rastmittel (20) einen Entrastungsabschnitt (26) aufweist, an dem die Verrastung durch eine Krafteinwirkung von außen lösbar ist, insbesondere dass das Rastmittel (20) an der ersten Taschenseitenwand (12a, 12b, 34) oder der zweiten Taschenseitenwand (13, 14, 32) einen Vorsprung oder eine Ausnehmung (26) umfasst, so dass bei einer Krafteinwirkung im Bereich des Vorsprungs oder der Ausnehmung (26) zu dem Klappverbindungsbereich (15) oder dem weiteren Klappverbindungsbereich hin oder davon weg nur Kraft auf eine der Taschenseitenwände (12a, 12b, 34; 13, 14, 32) ausgeübt werden muss, um die Verrastung zu lösen, wobei diese kraftbeaufschlagbare Täschenseitenwand (12a, 12b, 34; 13, 14, 32) bevorzugt mit einem elastischem Element weg von oder hin zu dem Klappverbindungsbereich (15) oder dem weiteren Klappverbindungsbereich vorgespannt ist.

8. Hängetasche (50) nach einem der vorhergehenden Ansprüche, **dadurch gekennzeichnet, dass** die erste Taschenseitenwand (12a, 12b, 34) ein flexibles und/oder ein nicht flexibles Material und die zweite Taschenseitenwand (13, 14, 32) ein flexibles Material umfasst, so dass durch das flexible Material ein in der Hängetasche (50) aufgenommener Gegenstand (200) eine Klemmwirkung erfährt, und/oder dass die erste Taschenseitenwand (12a, 12b, 34) und/oder die zweite Taschenseitenwand (13, 14, 32) einen Rahmen, Bügel (12a, 12b, 13, 14) und/oder Rand umfasst, der/die zusammen mit einem oder mehreren flexiblen und/oder nicht flexiblen Flächenelementen (32, 34) eine Taschenseitenwand (12a, 12b, 34; 13, 14, 32) ausbilden, wobei bevorzugt das Flächenelement (32, 34) mit dem Rahmen, Bügel (12a, 12b, 13, 14) und/oder Rand einen in vier Raumrichtungen geschlossenen Taschenteilbereich ausbildet.

9. Hängetasche (50) nach einem der vorhergehenden Ansprüche, **dadurch gekennzeichnet, dass** wenigstens eine Taschenseitenwand (12a, 12b, 34; 13, 14, 32) eine Innenwand und/oder ein Innenfach aufweist, die eine Unterteilung des Fördergutaufnahmebereiches (30) in mehrere Teilbereiche bewirkt.

10. Hängetasche (50) einem der vorhergehenden Ansprüche, **dadurch gekennzeichnet, dass** die Hängetasche (50) mit mindestens einer vorzugsweise automatisch auslesbaren Kennung versehen ist, beispielsweise in der Form eines Strichcodes, eines 2D-Codes oder eines RFID-Transponders.

11. Hängetaschengestell (10) mit einem ersten Taschenseitenwandbügel (12a, 12b) und einem Anhängmittel (13) zum Ausbilden einer Hängetasche (50) nach einem der vorhergehenden Ansprüche durch Anordnen von Flächenelementen (32, 34) an dem ersten Taschenseitenwandbügel (12a, 12b) und dem Anhängmittel (13) unter Ausbildung von Taschenseitenwänden (12a, 12b, 34; 13, 14, 32), **dadurch gekennzeichnet, dass** der erste Taschenseitenwandbügel (12a, 12b) in einem Klappverbindungsbereich (15), bevorzugt um eine Gelenkverbindung mit Schwenkachse (16), schwenkbeweglich mit dem Anhängmittel (13) so verbunden ist, dass durch Schwenken des ersten Taschenseitenwandbügels (12a, 12b) um die Schwenkachse (16) der erste Taschenseitenwandbügel (12a, 12b) und das Anhängmittel (13) auseinanderklappbar und zusammenklappbar sind, um eine in einer Transportstellung obenliegende erste Öffnung einer mit dem Hängetaschengestell (10) ausgebildeten Hängetasche (50) aufzuweiten oder zu verengen, wobei das Hängetaschengestell (10) einen zweiten Taschenseitenwandbügel (14) aufweist, der schwenkbeweglich mit dem ersten Taschenseitenwandbügel (12a, 12b) in einem Klappverbindungsbereich (15) oder in einem weiteren Klappverbindungsbereich verbunden und durch ein Rastmittel (20) mit diesem verrastet ist, so dass bei Lösung des Rastmittels (20) der erste Taschenseitenwandbügel (12a, 12b) und der zweite Taschehseitenwandbügel (14) trennbar sind, um eine zweite Öffnung am unteren Ende einer mit dem Hängetaschengestell (10) ausgebildeten Hängetasche (50) zu öffnen, wobei der erste Taschenseitenwandbügel (12a, 12b) und der zweite Taschenseitenwandbügel (14) schwenkbeweglichl zum Öffnen der zweiten Öffnung verbunden sind.

12. Hängetaschengestell (10) nach Anspruch 11, **dadurch gekennzeichnet, dass** die Schwenkbewegung um die Gelenkverbindung mit Schwenkachse (16) oder um eine weitere Gelenkverbindung mit Schwenkachse erfolgt.

13. Hängetaschengestell (10) nach Anspruch 11 oder 12,
**dadurch gekennzeichnet, dass** die Gelenkverbindung mit Schwenkachse (16) als Rastergelenk (16) ausgebildet ist, wobei das Rastergelenk (16) bevorzugt mit einem Drehbereich (19a) und einem Rasterbereich (19b) ausgebildet ist, wobei diese in einem entsprechend ausgebildeten Gelenkabschnitt (13a) des Anhängmittels (13) angeordnet sind, wobei in Transportstellung der Rasterbereich (19b) in einem entsprechenden Rasterbereich des Gelenkabschnitts (13a) platziert ist, wodurch eine Schwenkbewegung des ersten Taschenseitenwandbügels (12a, 12b) gegenüber dem Anhängmittel (13) blockiert ist, wobei durch eine Verschiebung des Rastergelenks (16) der Rasterbereich (19b) von dem Rasterbereich des Gelenkabschnitts (13a) lösbar ist und der Drehbereich (19a) in einem Drehbereich des Gelpnkabschnitts (13a) positionierbar ist, womit eine Schwenkbewegung des ersten Taschenseitenwandbügels (12a, 12b) gegenüber dem Anhängmittel (13) freigegeben ist.

14. Hängetaschengestell (10) nach einem der Ansprüche 11 bis 13,
**dadurch gekennzeichnet, dass** das der zweite Taschenseitenwandbügel (13) elastisch vorgespannt ist, zu dem ersten Taschenseitenwandbügel (12a, 12b) zurückzuschwenken und/oder von diesem wegzuschwenken, insbesondere durch ein im Klappverbindungsbereich (15) oder im weiteren Klappverbindungsbereich angeordnetes elastisches Element, bevorzugt durch eine Spiralfeder und/oder eine Schenkelfeder.

15. Hängetaschengestell (10) nach einem der Ansprüche 11 bis 14,
**dadurch gekennzeichnet, dass** der erste Taschenseitenwandbügel (12a, 12b) aus zwei Bügelelementen (12a, 12b) gebildet ist, die in dem Klappverbindungsbereich (15) oder dem weiteren Klappverbindungsbereich miteinander verbunden sind, wobei bevorzugt im zusammengeklappten Zustand das eine Bügelelement (12a) parallel zu dem Anhängmittel (13) ist und/oder an diesem anliegt und das andere Bügelelement (12b) parallel zu dem zweiten Taschenseitenwandbügel (14) ist und/oder an diesem anliegt.

16. Hängetaschengestell (10) nach einem Ansprüche 11 bis 15, wobei an den Taschenseitenwandbügeln (12a, 12b, 14) und dem Anhängmittell (13) Flächenelemente (32, 34) angeordnet sind, wobei bevorzugt ein erstes Flächenelement (32) an dem ersten Taschenseitenwandbügel (12a, 12b) und ein zweites Flächenelement (34) aus flexiblem Material an dem zweiten Taschenseitenwandbügel (14) und dem Anhängmittel (13) angeordnet und befestigt ist.

17. Hängefördereinrichtung (100), umfassend mindestens eine Hängetasche (50) nach einem der Ansprüche 1 bis 10 und/oder mindestens ein Hängetaschengestell (10) nach einem der Ansprüche 11 bis 16, und mindestens eine Führungsschienenanordnung (102), an der die mindestens eine Hängetasche (50) und/oder das mindestens eine Hängetaschengestell (10) geführt bewegbar ist, wobei die mindestens eine Hängetasche (50) und/oder das mindestens eine Hängetaschengestell (10) durch die Führungsschienenanordnung (102) an mindestens einem Arbeitsplatz (104) vorbeiführbar ist, an dem Betätigungsvorrichtungen vorgesehen sind, die geeignet sind, auf die Taschenseiteinwände (12a, 12b, 34; 13, 14, 32) und/oder die Taschenseitenwandbügel (12a, 12b, 14) und/oder das Anhängmittel (13) einzuwirken, um eine Schwenkbewegung der Taschenseitenwände (12a, 12b, 34; 13, 14, 32) und/oder des ersten und des zweiten Taschenseitenwandbügels (12a, 12b, 14) und/oder eine Schwenkbewegung des ersten Taschenseitenwandbügels (12a, 12b, 14) und des Anhängmittels (13) und/oder ein Entrasten und/oder Verrasten des Rastmittels (20) und/oder eine Drehung der mindestens einen Hängetasche (50) und/oder eine Drehung des mindestens einen Hängetaschengestells zu bewirken, wobei bevorzugt an mindestens einem Arbeitsplatz (104) mehrere Betätigungsvorrichtungen vorgesehen sind, um ein Be- und/oder Entladen hin zu verschiedenen Unterbereichen (106, 108) des Arbeitsbereichs und/oder auch zu anderen Arbeitsbereichen (104) hin zu erlauben, wobei die Arbeitsbereiche (104) insbesondere Sortier-, Pack-, Be- (110) und/oder Entladestationen (112) und/oder Transportmittel wie Rutschen (114), Rollen und/oder Förderbänder (116) umfassen.

## Claims

1. Hanging pouch (50) acting as a conveyed goods container for transporting goods to be conveyed (200) in a hanging conveyor device (100), comprising a suspension means (13) and a first pouch side wall (12a, 12b, 34) and a second pouch side wall (13, 14, 32) which, being opposite one another, define therebetween a conveyed goods receiving region (30) comprising a first opening and are interconnected in a hinged connection region (15) such that they can be folded apart and folded together in order to widen or narrow the first opening, the suspension means (13) being designed to suspend the hanging pouch (50) from a hanging conveyor device (100) in a transport position in which the first opening is at the top, the first pouch side wall (12a, 12b, 34) and the second pouch side wall (13, 14, 32) being movable relative to one another in the transport position such that they form a second opening in the conveyed goods receiving region (30) at the lower end of the hanging pouch (50), **characterised in that** the first pouch side wall (12a, 12b, 34) comprises at least one rigid edge contour region and is connected to the suspension means (13) at said region so as to be pivotable about a pivot pin which extends horizontally when the hanging pouch (50) is in its transport position, and **in that** the second pouch side wall (13, 14, 32) is connected to the suspension means (13), or said suspension means is able to act on said side wall, at a position in which said side wall is remote from the pivot pin and the hinged connection region (15), such that the pouch side walls (12a, 12b, 34; 13, 14, 32) can be folded apart and folded together by pivoting the first pouch side wall (12a, 12b, 34) about the pivot pin, in order to widen and narrow the first opening.

2. Hanging pouch (50) according to claim 1, **characterised in that** the first pouch side wall (12a, 12b, 34) and the second pouch side wall (13, 14, 32) are interconnected in the hinged connection region (15) or a further hinged connection region such that they can be folded apart and folded together in order to widen or narrow the second opening.

3. Hanging pouch (50) according to claim 2, **characterised in that** the first pouch side wall (12a, 12b, 34) and the second pouch side wall (13, 14, 32) each comprise an upper pouch side wall element (12a; 13) and a lower pouch side wall element (12b; 14), the upper pouch side wall elements (12a, 13) being folded apart during the folding-apart process for widening the first opening and the lower pouch side wall elements (12b; 14) being folded apart during the folding-apart process for widening the second opening.

4. Hanging pouch (50) according to any of the preceding claims, **characterised in that** the first pouch side wall (12a, 12b, 34) and the second pouch side wall (13, 14, 32) are interlocked by a latching means (20) such that, when the latching means (20) is released, the first pouch side wall (12a, 12b, 34) and the second pouch side wall (13, 14, 32) are movable relative to one another in the transport position such that the second opening can be widened.

5. Hanging pouch (50) according to claim 4, **characterised in that** the latching means (20) is formed by at least one curved tab extension (22) on the first pouch side wall (12a, 12b, 34) or the second pouch side wall (13, 14, 32), in which extension a latching portion (24) corresponding to the second pouch side wall (13, 14, 32) or the first pouch side wall (12a, 12b, 34) can be arranged in order for locking to take place.

6. Hanging pouch (50) according to claim 4, **characterised in that** the latching means (20) is in the form of a latching clamp (20), the latching clamp (20) comprising a region that is rotatable about a portion of the first or the second pouch side wall (12a, 12b), which region is connected to a clamp or hook portion (23), which encloses a portion of the second or the first pouch side wall (13, 14), respectively, at least in part, the latching clamp (20) also comprising an actuation portion (21) which can bring about a rotational movement of the latching clamp (20) when actuated, as a result of which the clamp or hook portion (23) is detached from the portion of the second or the first pouch side wall (13, 14).

7. Hanging pouch (50) according to claim 4, 5 or 6, **characterised in that** the latching means (20) comprises an unlatching portion (26) at which the locking can be released by a force being applied from the outside, in particular **in that** the latching means (20) comprises, on the first pouch side wall (12a, 12b, 34) or the second pouch side wall (13, 14, 32), a projection or a recess (26) so that, when a force is applied in the region of the projection or the recess (26) towards or away from the hinged connection region (15) or the further hinged connection region, force only has to be exerted on one of the pouch side walls (12a, 12b, 34; 13, 14, 32) in order to release the locking, said pouch side wall (12a, 12b, 34; 13, 14, 32) on which the force can act preferably being biased away from or towards the hinged connection region (15) or the further hinged connection region by means of a resilient element.

8. Hanging pouch (50) according to any of the preceding claims, **characterised in that** the first pouch side wall (12a, 12b, 34) comprises a flexible and/or an inflexible material and the second pouch side wall (13, 14, 32) comprises a flexible material, such that an object (200) held in the hanging pouch (50) is subject to a clamping action as a result of the flexible material, and/or **in that** the first pouch side wall (12a, 12b, 34) and/or the second pouch side wall (13, 14, 32) comprises a frame, bracket (12a, 12b, 13, 14) and/or edge which forms, together with one or more flexible and/or inflexible surface elements (32, 34), a pouch side wall (12a, 12b, 34; 13, 14, 32), the surface element (32, 34) preferably forming, together with the frame, bracket (12a, 12b, 13, 14) and/or edge, a pouch sub-region which is closed in four spatial directions.

9. Hanging pouch (50) according to any of the preceding claims, **characterised in that** at least one pouch side wall (12a, 12b, 34; 13, 14, 32) comprises an interior wall and/or an interior compartment which divides the conveyed goods receiving region (30) into a plurality of sub-regions.

10. Hanging pouch (50) according to any of the preceding claims, **characterised in that** the hanging pouch (50) is provided with at least one identifier, which can preferably be read out automatically, for example in the form of a barcode, a 2D code or an RFID transponder.

11. Hanging pouch mount (10) comprising a first pouch side wall bracket (12a, 12b) and a suspension means (13) for forming a hanging pouch (50) according to any of the preceding claims by arranging surface elements (32, 34) on the first pouch side wall bracket (12a, 12b) and the suspension means (13), thus forming pouch side walls (12a, 12b, 34; 13, 14, 32), **characterised in that** the first pouch side wall bracket (12a, 12b) is connected to the suspension means (13) in a hinged connection region (15), preferably so as to be pivotable about an articulated connection having a pivot pin (16), such that the first pouch side wall bracket (12a, 12b) and the suspension means (13) can be folded apart and folded together by pivoting the first pouch side wall bracket (12a, 12b) about the pivot pin (16), in order to widen or narrow a first opening in a hanging pouch (50) formed by means of the hanging pouch mount (10), which opening is at the top in a transport position, the hanging pouch mount (10) comprising a second pouch side wall bracket (14) which is pivotally connected to the first pouch side wall bracket (12a, 12b) in a hinged connection region (15) or in a further hinged connection region and is locked thereto by means of a latching means (20) such that the first pouch side wall bracket (12a, 12b) and the second pouch side wall bracket (14) can be separated when the latching means (20) is released, in order to open a second opening in the lower end of a hanging pouch (50) formed by means of the hanging pouch mount (10), the first pouch side wall bracket (12a, 12b) and the second pouch side wall bracket (14) being pivotally connected in order to open the second opening.

12. Hanging pouch mount (10) according to claim 11, **characterised in that** the pivot movement occurs about the articulated connection having the pivot pin (16) or about a further articulated connection having a pivot pin.

13. Hanging pouch mount (10) according to either claim 11 or claim 12, **characterised in that** the articulated connection having the pivot pin (16) is in the form of a latching joint (16), the latching joint (16) preferably being designed having a rotational region (19a) and a latching region (19b), said regions being arranged in a correspondingly designed joint portion (13a) of the suspension means (13), the latching region (19b) being placed in a corresponding latching region of the joint portion (13a) in the transport position, as a result of which the first pouch side wall bracket (12a, 12b) is prevented from pivoting with respect to the suspension means (13), the latching region (19b) being detachable from the latching region of the joint portion (13a) by moving the latching joint (16), and it being possible to position the rotational region (19a) in a rotational region of the joint portion (13a), as a result of which the first pouch side wall bracket (12a, 12b) is allowed to pivot with respect to the suspension means (13).

14. Hanging pouch mount (10) according to any of claims 11 to 13, **characterised in that** the second pouch side wall bracket (13) is resiliently biased to pivot back towards the first pouch side wall bracket (12a, 12b) and/or to pivot away therefrom, in particular by means of a resilient element which is arranged in the hinged connection region (15) or in the further hinged connection region, preferably by means of a spiral spring and/or a leg spring.

15. Hanging pouch mount (10) according to any of claims 11 to 14, **characterised in that** the first pouch side wall bracket (12a, 12b) is formed of two bracket elements (12a, 12b) which are interconnected in the hinged connection region (15) or the further hinged connection region, one bracket element (12a) preferably being parallel to and/or abutting the suspension means (13) in the folded-together state and the other bracket element (12b) preferably being parallel to and/or abutting the second pouch side wall bracket (14) in said folded-together state.

16. Hanging pouch mount (10) according to any of claims 11 to 15, wherein surface elements (32, 34) are arranged on the pouch side wall brackets (12a, 12b, 14) and the suspension means (13), with a first surface element (32) preferably being arranged and fastened on the first pouch side wall bracket (12a, 12b) and a second surface element (34) consisting of flexible material preferably being arranged and fastened on the second pouch side wall bracket (14) and the suspensions means (13).

17. Hanging conveyor device (100) comprising at least one hanging pouch (50) according to any of claims 1 to 10 and/or at least one hanging pouch mount (10) according to any of claims 11 to 16, and at least one guide rail arrangement (102) on which the at least one hanging pouch (50) and/or the at least one hanging pouch mount (10) can be moved in a guided manner, wherein the at least one hanging pouch (50) and/or the at least one hanging pouch mount (10) can be guided past at least one working space (104) by means of the guide rail arrangement (102), in which space actuation devices are provided which are suitable for acting on the pouch side walls (12a, 12b, 34; 13, 14, 32) and/or the pouch side wall brackets (12a, 12b, 14) and/or the suspension means (13) in order to bring about a pivot movement of the pouch side walls (12a, 12b, 34; 13, 14, 32) and/or the first and the second pouch side wall bracket (12a, 12b, 14) and/or a pivot movement of the first pouch side wall bracket (12a, 12b, 14) and the suspension means (13) and/or unlatching and/or locking of the latching means (20) and/or a rotational movement of the at least one hanging pouch (50) and/or a rotational movement of the at least one hanging pouch mount, wherein a plurality of actuation devices are preferably provided in at least one working space (104), in order to allow for loading and/or unloading towards various sub-regions (106, 108) of the working region and/or towards other working regions (104), wherein the working regions (104) comprise in particular sorting, packing, loading (110) and/or unloading stations (112) and/or transport means, such as chutes (114), rollers and/or conveyor belts (116).

## Revendications

1. Poche suspendue (50) comme conteneur de marchandises transportées pour le transport de marchandises transportées (200) dans un dispositif de transport suspendu (100), avec un moyen d'accrochage (13) et avec une première paroi latérale de poche (12a, 12b, 34) et une deuxième paroi latérale de poche (13, 14, 32) qui, en se faisant face l'une l'autre, délimitent entre elles une zone de réception de marchandises transportées (30) avec une première ouverture et sont reliées ensemble dans une zone de liaison pliante (15) de sorte qu'elles sont dépliables et sont repliables, pour élargir ou rétrécir la première ouverture, dans laquelle le moyen d'accrochage (13) est conçu pour accrocher la poche suspendue (50) dans une position de transport avec une première ouverture supérieure à un dispositif de transport suspendu (100), dans laquelle la première paroi latérale de poche (12a, 12b, 34) et la deuxième paroi latérale de poche (13, 14, 32) dans la position de transport sont mobiles l'une par rapport à l'autre de manière telle qu'elles forment une deuxième ouverture de la zone de réception de marchandises transportées (30) à l'extrémité inférieure de la poche suspendue (50), **caractérisée en ce que** la première paroi latérale de poche (12a, 12b, 34) présente au moins une zone de contour marginale rigide et y est reliée au moyen d'accrochage (13) par pivotement autour d'un pivot passant horizontalement dans la position de transport de la poche suspendue (50) et **en ce que** la deuxième paroi latérale de poche (13, 14, 32) est reliée, à une position distante du pivot et de la zone de liaison pliante (15), au moyen d'accrochage (13) ou peut être sollicitée par celui-ci de manière telle que par pivotement de la première paroi latérale de poche (12a, 12b, 34) autour du pivot, les parois latérales de poche (12a, 12b, 34 ; 13, 14, 32) peuvent être dépliées ou repliées, pour élargir ou rétrécir la première ouverture.

2. Poche suspendue (50) selon la revendication 1, **caractérisée en ce que** la première paroi latérale de poche (12a, 12b, 34) et la deuxième paroi latérale de poche (13, 14, 32) sont reliées ensemble dans la zone de liaison pliante (15) ou une autre zone de liaison pliante de sorte qu'elles sont dépliables et sont repliables pour élargir ou rétrécir la deuxième ouverture.

3. Poche suspendue (50) selon la revendication 2, **caractérisée en ce que** la première paroi latérale de poche (12a, 12b, 34) et la deuxième paroi latérale de poche (13, 14, 32) comprennent à chaque fois un élément de paroi latérale de poche supérieur (12a ; 13) et un élément de paroi latérale de poche inférieur (12b ; 14), dans laquelle, lors du dépliage pour élargir la première ouverture, les éléments de paroi latérale de poche supérieurs (12a, 13) et, lors du dépliage pour élargir la deuxième ouverture, les éléments de paroi latérale de poche inférieurs (12b ; 14) se déplient.

4. Poche suspendue (50) selon l'une des revendications précédentes, **caractérisée en ce que** la première paroi latérale de poche (12a, 12b, 34) et la deuxième paroi latérale de poche (13, 14, 32) sont encliquetées ensemble par un moyen d'encliquetage (20) de manière telle que lors du détachement du moyen d'encliquetage (20), la première paroi latérale de poche (12a, 12b, 34) et la deuxième paroi latérale de poche (13, 14, 32) dans la position de transport sont mobiles l'une par rapport à l'autre de sorte que la deuxième ouverture peut être élargie.

5. Poche suspendue (50) selon la revendication 4, **caractérisée en ce que** le moyen d'encliquetage (20) est formé par au moins un prolongement de languette incurvé (22) de la première paroi latérale de poche (12a, 12b, 34) ou de la deuxième paroi latérale de poche (13, 14, 32), dans lequel peut être agencée une section d'encliquetage (24) correspondant à la deuxième paroi latérale de poche (13, 14, 32) ou à la première paroi latérale de poche (12a, 12b, 34), pour provoquer un encliquetage.

6. Poche suspendue (50) selon la revendication 4, **caractérisée en ce que** le moyen d'encliquetage (20) est conçu comme une pince à cliquet (20), dans lequel la pince à cliquet (20) présente une zone rotative autour d'une section de la première ou de la deuxième paroi latérale de poche (12a, 12b), qui est reliée à une section de pince ou de crochet (23) qui entoure au moins partiellement une section de la deuxième ou de la première paroi latérale de poche (13, 14), dans laquelle la pince à cliquet (20) présente en outre une section d'actionnement (21), par son actionnement un mouvement rotatif de la pince à cliquet (20) peut être provoqué, par lequel la section de pince ou la section de crochet (23) est détachée de la section de la deuxième ou de la première paroi latérale de poche (13, 14).

7. Poche suspendue (50) selon la revendication 4, 5 ou 6, **caractérisée en ce que** le moyen d'encliquetage (20) présente une section de désencliquetage (26) à laquelle l'encliquetage en exerçant une force de l'extérieur peut être débloqué, notamment **en ce que** le moyen d'encliquetage (20) comprend sur la première paroi latérale de poche (12a, 12b, 34) ou la deuxième paroi latérale de poche (13, 14, 32) une partie en saillie ou un évidement (26) de sorte qu'en exerçant une force dans la zone de la partie en saillie ou de l'évidement (26) vers ou à distance de la zone de liaison pliante (15) ou de l'autre zone de liaison pliante, la force ne doit être exercée que sur l'une des parois latérales de poche (12a, 12b, 34 ; 13, 14, 32) pour débloquer l'encliquetage, dans laquelle cette paroi latérale de poche (12a, 12b, 34 ; 13, 14, 32) pouvant être sollicitée par une force est précontrainte, de préférence, avec un élément élastique à distance de ou vers la zone de liaison pliante (15) ou l'autre zone de liaison pliante.

8. Poche suspendue (50) selon l'une des revendications précédentes, **caractérisée en ce que** la première paroi latérale de poche (12a, 12b, 34) comprend un matériau flexible et / ou un matériau non flexible et la deuxième paroi latérale de poche (13, 14, 32) comprend un matériau flexible, de sorte que par le matériau flexible, un objet (200) reçu dans la poche suspendue (50) subit une action de serrage, et / ou que la première paroi latérale de poche (12a, 12b, 34) et / ou la deuxième paroi latérale de poche (13, 14, 32) comprend un cadre, des étriers (12a, 12b, 13, 14) et / ou un bord qui forment, conjointement avec un ou plusieurs éléments de surface flexibles et / ou non flexibles (32, 34), une paroi latérale de poche (12a, 12b, 34 ; 13, 14, 32) dans laquelle, de préférence, l'élément de surface (32, 34) forme avec le cadre, les étriers (12a, 12b, 13, 14) et / ou le bord, une zone partielle de poche fermée dans quatre directions spatiales.

9. Poche suspendue (50) selon l'une des revendications précédentes, **caractérisée en ce qu'**au moins une paroi latérale de poche (12a, 12b, 34 ; 13, 14, 32) présente une paroi intérieure et / ou un compartiment intérieur qui réalise une subdivision de la zone de réception de marchandises transportées (30) en plusieurs zones partielles.

10. Poche suspendue (50) selon l'une des revendications précédentes, **caractérisée en ce que** la poche suspendue (50) est dotée d'au moins une identification lisible, de préférence, automatiquement, par exemple, sous forme d'un code-barres, d'un code 2D ou d'un transpondeur RFID.

11. Châssis de poche suspendue (10) avec un premier étrier de paroi latérale de poche (12a, 12b) et un moyen d'accrochage (13) pour former une poche suspendue (50) selon l'une des revendications précédentes en agençant des éléments de surface (32, 34) sur le premier étrier de paroi latérale de poche (12a, 12b) et le moyen d'accrochage (13) en formant des parois latérales de poche (12a, 12b, 34 ; 13, 14, 32), **caractérisé en ce que** le premier étrier de paroi latérale de poche (12a, 12b) dans une zone de liaison pliante (15) est relié par pivotement au moyen d'accrochage (13), de préférence autour d'une articulation à rotule avec pivot (16), de manière telle que par pivotement du premier étrier de paroi latérale de poche (12a, 12b) autour du pivot (16), le premier étrier de paroi latérale de poche (12a, 12b) et le moyen d'accrochage (13) peuvent être dépliés et repliés afin d'élargir ou de rétrécir une première ouverture supérieure dans une position de transport d'une poche suspendue conçue avec le châssis de poche suspendue (10), dans lequel le châssis de poche suspendue (10) présente un deuxième étrier de paroi latérale de poche (14) qui est relié par pivotement au premier étrier de paroi latérale de poche (12a, 12b) dans une zone de liaison pliante (15) ou dans une autre zone de liaison pliante et est encliqueté avec celui-ci par un moyen d'encliquetage (20), de sorte que lors du détachement du moyen d'encliquetage (20), le premier étrier de paroi latérale de poche (12a, 12b) et le deuxième étrier de paroi latérale de poche (14) sont séparables, pour ouvrir une deuxième ouverture à l'extrémité inférieure d'une poche suspendue (50) conçue avec le châssis de poche suspendue (10), dans lequel le premier étrier de paroi latérale de poche (12a, 12b) et le deuxième étrier de paroi latérale de poche (14) sont reliés par pivotement pour ouvrir la deuxième ouverture.

12. Châssis de poche suspendue (10) selon la revendication 11, **caractérisé en ce que** le mouvement pivotant se fait autour de l'articulation à rotule avec pivot (16) ou autour d'une autre articulation à rotule avec pivot.

13. Châssis de poche suspendue (10) selon la revendication 11 ou 12, **caractérisé en ce que** l'articulation à rotule avec pivot (16) est conçue comme une articulation à cliquet (16), dans lequel l'articulation à cliquet (16) est conçue de préférence avec une zone de rotation (19a) et une zone d'encliquetage (19b), dans lequel celles-ci sont disposées dans une section articulée (13a) du moyen d'accrochage (13) conçue en conséquence, dans lequel en position de transport la zone d'encliquetage (19b) est placée dans une zone d'encliquetage correspondante de la section articulée (13a), ce par quoi un mouvement pivotant du premier étrier de paroi latérale de poche (12a, 12b) est bloqué par rapport au moyen d'accrochage (13), dans lequel par un déplacement de l'articulation à cliquet (16), la zone d'encliquetage (19b) est détachable de la zone à cliquet de la section articulée (13a) et la zone de rotation (19a) peut être positionnée dans une zone de rotation de la section articulée (13a), ce faisant un mouvement pivotant du premier étrier de paroi latérale de poche (12a, 12b) est débloqué par rapport au moyen d'accrochage (13).

14. Châssis de poche suspendue (10) selon l'une des revendications 11 à 13, **caractérisé en ce que** le deuxième étrier de paroi latérale de poche (13) est précontraint élastiquement, afin de pivoter en arrière vers le premier étrier de paroi latérale de poche (12a, 12b) et / ou de pivoter à distance de celui-ci, en particulier par un élément élastique disposé dans la zone de liaison pliante (15) ou dans l'autre zone de liaison pliante, de préférence par un ressort spiral et / ou un ressort à branches.

15. Châssis de poche suspendue (10) selon l'une des revendications 11 à 14, **caractérisé en ce que** le premier étrier de paroi latérale de poche (12a, 12b) est formé de deux éléments formant étrier (12a, 12b), qui sont reliés ensemble dans la zone de liaison pliante (15) ou l'autre zone de liaison pliante, dans lequel de préférence à l'état plié, l'élément formant étrier (12a) est parallèle au moyen d'accrochage (13) et / ou est adjacent à celui-ci et l'autre élément formant étrier (12b) est parallèle au deuxième étrier de paroi latérale de poche (14) et / ou est adjacent à celui-ci.

16. Châssis de poche suspendue (10) selon l'une des revendications 11 à 15, dans lequel des éléments de surface (32, 34) sont disposés sur les étriers de paroi latérale de poche (12a, 12b, 14) et le moyen d'accrochage (13), dans lequel, de préférence, un premier élément de surface (32) est disposé et fixé au premier étrier de paroi latérale de poche (12an 12b) et un deuxième élément de surface (34) en matériau flexible est disposé et fixé au deuxième étrier de paroi latérale de poche (14) et au moyen d'accrochage (13).

17. Dispositif de transport suspendu (100), comprenant au moins une poche suspendue (50) selon l'une des revendications 1 à 10 et / ou au moins un châssis de poche suspendue (10) selon l'une des revendications 11 à 16, et au moins un dispositif à rails de guidage (102), sur lequel la au moins une poche suspendue (50) et / ou le au moins un châssis de poche suspendue (10) est mobile en étant guidé(e), dans lequel la au moins une poche suspendue (50) et / ou le au moins un châssis de poche suspendue (10) peut être passé(e) devant au moins un poste de travail (104) par le dispositif à rails de guidage (102), sur lequel des dispositifs d'actionnement sont prévus, lesquels sont appropriés pour agir sur les parois latérales de poche (12a, 12b, 34 ; 13, 14, 32) et / ou les étriers de paroi latérale de poche (12a, 12b, 14) et / ou le moyen d'accrochage (13), pour provoquer un mouvement pivotant des parois latérales de poche (12a, 12b, 34 ; 13, 14, 32) et / ou du premier et du deuxième étrier de paroi latérale de poche (12a, 12b, 14) et / ou un mouvement pivotant du premier étrier de paroi latérale de poche (12a, 12b, 14) et du moyen d'accrochage (13) et / ou un désencliquetage et / ou encliquetage du moyen d'encliquetage (20) et / ou une rotation de la au moins une poche suspendue (50) et / ou une rotation du au moins un châssis de poche suspendue, dans lequel, de préférence, plusieurs dispositifs d'actionnement sont prévus à au moins un poste de travail (104) pour permettre un chargement et / ou un déchargement vers différentes sous-zones (106, 108) de la zone de travail et / ou aussi vers d'autres zones de travail (104), dans lequel les zones de travail (104) comprennent notamment des postes de tri, d'emballage, de chargement (110) et / ou de déchargement (112) et / ou des moyens de transport comme des glissières (114), des rouleaux et / ou des bandes transporteuses (116).
